# EUROPEAN PATENT SPECIFICATION

(11) **EP 3 485 104 B1**
(45) Date of publication and mention of the grant of the patent: **28.12.2022**
(21) Application number: 17737293.5
(22) Date of filing: 14.07.2017
(51) Int. Cl.: E04C 2/20, E04C 2/36, A01K 1/00, B29C 45/00

(54) **A SEPARATION PANEL AND THE RELATED MANUFACTURING METHOD**
TRENNWAND UND ZUGEHÖRIGES HERSTELLUNGSVERFAHREN
PANNEAU DE SÉPARATION ET SON PROCÉDÉ DE FABRICATION ASSOCIÉ

(30) Priority: 14.07.2016 EP 16179578
(43) Date of publication of application: 22.05.2019
(73) Proprietor: Paneltim N V, 8810 Lichtervelde (BE)
(72) Inventor: DE MEYER, Stijn, 9520 St. Lievens Houtem (BE); DELTOUR, Filip, 8650 Merkem (BE); DELTOUR, Lode, 8920 Langemark (BE)
(74) Representative: IP HILLS NV
(86) International application number: PCT/EP2017/067831
(87) International publication number: WO 2018/011393

(56) References cited:
- EP-A- 0 872 177
- EP-A- 1 922 919
- EP-A2- 1 219 168
- WO-A-2013/091000
- DE-A1- 4 237 912
- DE-U1- 8 610 180
- US-B2- 9 010 060

## Description

### Field of the Invention

The present invention generally relates to a separating panel used as a construction wall of buildings, for example of non-pressurized constructions such as air scrubbers or air filters, or for example of pressurized constructions such as liquid tanks or gas tanks. The present invention also generally relates to a separation panel for a location where animals stay, such as for example a cattle pen, an enclosure for livestock, etc..

Such separation panels are used, amongst other, for forming partitions in barns for animals, for example in the intensive animal husbandry, where the separation panels are used for subdividing litter stations and rearing stations into separate stalls.

### Background of the Invention

In the intensive animal husbandry, barns in which animals stay must be cleaned thoroughly on a very regular basis in order to minimize the spreading of bacteria and disease-carrying germs that can endanger the health of the livestock. For example, after a group of animals has been moved out of a barn, and before a second group of animals takes the place of the first group, the barn and the separation panels must be thoroughly cleaned and disinfected in order to prevent a possible transfer of diseases from animals of the first group to animals of the second group. A fast and efficient cleaning solution requires the use detergent or water under high pressure.

The separation panels must therefore be able to withstand repeated cleanings, for example repeated cleanings based on water under high pressure. The separation panels must also be light weight such that they can be manually moved in the barns during the cleaning of the barns and/or the sorting of the animals. Preferably, the separation panels must also be able to withstand elevated temperatures without igniting in order for example to prevent spreading of flames to adjacent stalls and barns in case of fire, or for example to prevent the ignition of gases comprised in a gas tank construction.

Separation panels may be manufactured in laminated fibreboard. However, such fibreboard plates are not water- nor moist-resistant and they absorb humidity in humid conditions. Swollen separation panels are difficult to manually move around and they lose their stability and hygienic features. Alternatively, separation panels may be manufactured in concrete. However, concrete-made separation panels must be coated in order to make them hygienic enough to be used in enclosures for livestock for example. This makes the manufacturing process of the separation panels more complex. Alternatively, separation panels may be manufactured in steel-bordered and reinforced massive plates of thermo-hardening synthetic material. However, the required steel reinforcement makes the separation panels heavy and less hygienic as separation panels comprising steel are subject to rusting. If the separation panels become soiled by cleaning water, urine, excrements, etc., it becomes impossible to clean the separation panels thoroughly.

EP1219168 discloses a separation panel for a space for keeping animals. The separation panel described in EP1219168 consists of synthetic material manufactured by injection moulding and is closed on all sides. This provides for a minimum deposition of dirt on these panels and ensures the separation panel is very resistant against chemical products, mildews, bacteria and disinfectants present in the barns. Corrosion or decomposition of the synthetic separation panel is totally excluded. The separation panel described in EP1219168 is injection moulded such that it comprises smooth convex outer surfaces that do not present any irregularities. This way, the risk that an animal hurts itself on protrusions of the separation panel and the risk that dirt accumulates in recesses of the separation panel are minimized.

In the fields of construction and intensive animal husbandry, separation panels must further demonstrate good mechanical strength. For example, when separation panels are subdividing litter or rearing stations into separate stalls, animals might lean on the separation panels, thereby exercising a local pressure point, and they might also bump into the separation panels with their legs, their heads, their horns, etc.. The separation panels must therefore demonstrate good bend, tensile, shear and compression strengths to withstand forces applied parallel or perpendicular to them without changing shape or being torn. Additionally, separation panels demonstrating good thermal isolation properties can also be used in construction as thermal isolators.

The separation panel disclosed in EP1219168 comprises empty inside partitions along the longitudinal length of the separation panel. No material is therefore present in the partition and there exists a risk that a sidewall of the separation panel bends when submitted to a local pressure at a location of an inside partition, and/or when bumped by the horns of an animal at a location of an inside partition. Additionally, as it is designed to be light-weight, a large number of fixation points to the ground are necessary to ensure the separation panel stays upright and does not fall over when pushed by an animal. The separation panel of EP1219168 therefore demonstrate poor mechanical resistance. Alternatively, the inside partitions of the separation panel of EP1219168 can be filled with an insulating material which is not fire resistant nor fire retardant. On Fig. 5 of EP1219168, before closing the separation panel by placing the lowermost longitudinal edge 4, an insulating material can be brought into the partitions through the opening at the underside of the separation panel. A strip of insulating material is first cut at the dimensions of a partition and is manually inserted in one of the partitions. The strip is then manually slid along the partition until the partition is completely filled with insulating material. This operation is therefore complex and the resulting thermal isolating properties of the separation panel are limited. Indeed, as the separation panel of EP1219168 is manufactured in a single piece by injection moulding, the insulating material can only be brought into the separation panel at the partitions the closest to the lowermost longitudinal edge 4 once the separation panel has been moulded, and the other inside partitions of the separation panel therefore remain empty.

DE 42 37 912 A1 discloses a separation panel comprising two different semi-panels.

It is an objective of the present invention to disclose a separation panel and the related manufacturing method that overcomes the above identified shortcomings of existing solutions. More particularly, it is an objective to disclose a separation panel which demonstrates mechanical strengths and resistance while demonstrating good thermal isolation properties and ensuring hygienic conditions when used in locations where livestock is enclosed.

### Summary of the Invention

According to a first aspect of the present invention, the above defined objectives are realized by a method of manufacturing a separation panel made of a synthetic material, the method comprising the steps of:
- providing one mould;
- producing two semi-panels by injection moulding using the mould, wherein each of the two semi-panels comprises:
   ∘ a sidewall comprising an inner surface and an outer surface;
   ∘ a pair of parallel longitudinal walls extending from the inner surface and a pair of parallel traverse walls extending from the inner surface;
   and wherein both semi-panels further comprise a symmetric plurality of partition walls extending from the inner surface, wherein:
   ∘ the partition walls delimitate inside cavities in each of the semi-panels; and
   ∘ one or more of the partition walls comprise respective openings extending through the partition walls;
- arranging the two semi-panels one against the other along the longitudinal walls and the traverse walls such that the inner surfaces of the sidewalls face each other and such that the partition walls of one of the semi-panels are in direction contact with the partition walls of the other semi-panel when the two semi-panels are arranged one against the other, thereby forming a structure with a plurality of inside cavities connected through the openings; and
- welding the two semi-panels together along the longitudinal walls and the traverse walls, thereby forming the separation panel as a closed structure.

Injection moulding both semi-panels ensures the outer surfaces of the sidewalls of the semi-panels are smooth and without irregularities, such as protrusions and/or recesses, and the semi-panels are resistant to scratches. This way, the risk that animals hurt themselves on the separation panels and the risk that dirt accumulates on the separation panels are minimized. Additionally, the method comprises manufacturing a structure comprising inside cavities connected to each other through the openings. Separation panels manufactured with the method according to the present invention can be cleaned thoroughly and are therefore highly hygienic for uses in enclosures for livestock.

Separation panels manufactured according to the method of the present invention with connected inside cavities through the openings demonstrate improved mechanical strength compared to separation panels which comprise inside cavities which are not connected. In other words, the mesh of inside cavities connected inside a separation panel improves the bend, tensile, shear and compression strengths of the corresponding panel. A separation panel manufactured with the method according to the present invention is therefore more mechanically resistant and can withstand larger pressures and tensions without bending and/or tearing.

The manufacturing method according to the present invention is simple and flexible. Injection moulding both semi-panels allows manufacturing separation panels in a synthetic material such as for example a polymer material, a thermoplastic, etc.. To each type of semi-panel comprises an injection moulding mould which is re-used to manufacture semi-panels in series. The method is therefore cost effective. The method comprises manufacturing two semi-panels, which are symmetrical.

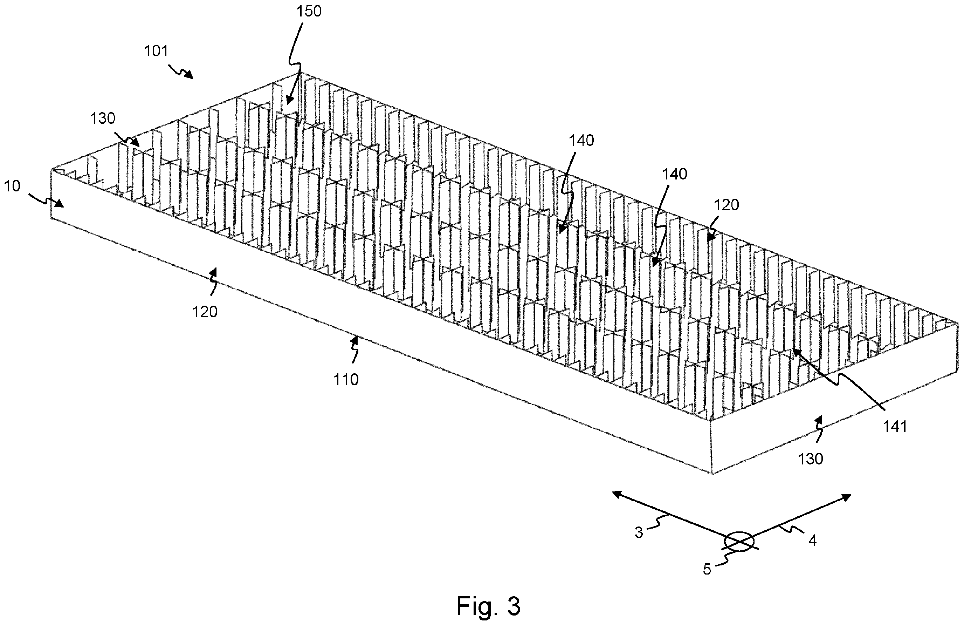

According to the present invention, the partition walls comprise respective openings extending through the partition walls. Alternatively, the partition walls comprise respective recesses. In other words, an inside cavity is defined by partition walls which each comprise an inner wall surface facing the inside cavity and an outer wall surface facing away from the inside cavity, and partition walls may comprise respective indentations defined on the inner wall surfaces and/or on the outer wall surfaces. The respective openings of the partition walls according to the present invention are rectangular. For example the openings are square. According to the present invention, the openings of the partition walls of a semi-panel are identical. Alternatively, the openings of the partition walls of a semi-panel are a combination of several shapes, for example rectangles, circles, triangles, rhombuses, oblong openings with sharp angles or round angles, etc.. According to the present invention, partition walls of the semi-panel comprise one opening. Alternatively, each partition wall of the semi-panel comprises more than one opening. Partition walls of a semi-panel may extend along the longitudinal direction and the traverse direction of the semi-panel. Alternatively, the partition walls of a semi-panel may be formed tilted with respect to the traverse direction or the longitudinal direction of the semi-panel. For example, partition walls may be formed under a +45° angle with respect to the traverse direction and/or may be formed under a -45° angle with respect to the traverse direction of the semi-panel. Alternatively, partition walls may be circular, semi-circular, wavy, may define a predefined pattern, etc.. Alternatively, partition walls in a semi-panel are not all identical and may be a combination of partition walls defined along the longitudinal direction and the traverse direction and/or tilted with respect to these directions and/or circular and/or arranged in the form of a predefined pattern. A separation panel according to the present invention may be used to construct walls, floors, ceilings, doors, roofs, windows in construction walls, etc.. A separation panel according to the present invention is for example used in pressurized or non-pressurized constructions, for example liquid tanks or gas tanks, or for constructions such as enclosures for livestock such as for example dogs, cows, pigs, fishes, poultry, horses, or any other animals, etc.. According to the present invention, the outer surface of the sidewall of a semi-panel is a flat, i.e. a smooth surface. Alternatively, the outer surface of the sidewall of a semi-panel comprises anti-slip structures extending from the outer surface. For example, the anti-slip structures may be circular structures or square structures injection moulded at the same time than the semi-panel. This way, a separation panel used for example as a floor panel on which animals must step in an enclosure for livestock prevents the animals from slipping when stepping and/or moving, thereby ensuring the animals remain safe. According to the present invention, the two semi-panels of the separation panel have the same thickness along the depth direction defined in Fig. 3. The thickness of a semi-panel according to the present invention is for example 5cm, 10cm, 20cm, 40cm, 60cm, 80cm, 100cm, etc.. Alternatively, the two semi-panels of the separation panel have different thicknesses along the depth direction defined in Fig. 3. This way, the method of manufacturing is made flexible as a semi-panel of a given thickness may be welded together with another semi-panel of a different thickness.

According to an optional aspect of the invention, the partition walls are longitudinal and/or traverse partition walls extending from the inner surface.

According to an optional aspect of the invention, the inside cavities are connected along the longitudinal direction and/or along the traverse direction through the openings.

According to an optional aspect of the invention, when each of the two semi-panels comprises a pair of parallel longitudinal walls extending from said inner surface and a pair of parallel traverse walls extending from the inner surface, the structure is a closed structure with a plurality of inside cavities connected through the openings.

Injection moulding both semi-panels ensures the outer surfaces of the sidewalls of the semi-panels are smooth and without irregularities, such as protrusions and/or recesses, and the semi-panels are resistant to scratches. This way, the risk that animals hurt themselves on the separation panels and the risk that dirt accumulates on the separation panels are minimized. Additionally, the method comprises manufacturing a closed structure comprising inside cavities connected to each other along the longitudinal direction and/or along the traverse direction of the separation panel through the openings. Manufacturing a closed structure ensures dirt does not enter and accumulate in the separation panel. Separation panels manufactured with the method according to the present invention can be cleaned thoroughly and are therefore highly hygienic for uses in enclosures for livestock.

Separation panels manufactured according to the method of the present invention with connected inside cavities through the openings demonstrate improved mechanical strength compared to separation panels which comprise inside cavities which are not connected along the longitudinal directions and/or their traverse directions. In other words, the mesh of inside cavities connected along the longitudinal directions and/or their traverse directions of a separation panel improves the bend, tensile, shear and compression strengths of the corresponding panel. A separation panel manufactured with the method according to the present invention is therefore more mechanically resistant and can withstand larger pressures and tensions without bending and/or tearing. A closed separation panel comprises air trapped between the two semi-panels when the two semi-panels are welded together.

According to an optional aspect of the invention, the method further comprises the step of filling the separation panel at least partially with a fire resistant material or a fire retardant material.

This way, the method ensures a manufactured separation panel withstands elevated temperatures without igniting. In case of fire, a separation panel therefore retards and/or prevents the spreading of heat and/or flames from one side of the separation panel the other side of the separation panel. Separation panels manufactured with the method according to the present invention can therefore be used in construction as thermal isolators and as fire blocking panels in buildings and in barns. Alternatively, the method further comprises the step of filling the separation panel with an insulating material adapted to increase the thermal properties of the separation panel. For example, filling the separation panel with an insulating material can ensure the separation panel thermally insulates the construction for which it is used as a wall, thereby preventing cold air from entering the construction. Alternatively, a separation panel according to the present invention is filled with one or more of the following: air, mineral wool, textiles, polystyrene foams and/or polystyrene beads, fibres, water, liquids, gases, etc.. Alternatively, the method further comprises filling the separation panel with an acoustically isolating material, such as for example a mineral wool which demonstrates for example an acoustic attenuation of 25 to 30dB. This way, a separation panel according to the present invention is adapted to isolate acoustically. Alternatively, the method further comprises filling the separation panel with an isolation material demonstrating good thermal isolation properties and good acoustical attenuation properties.

A separation panel according to the present invention is able to withstand higher resistances as the sidewalls of the separation panel are adapted to withstand the equivalent strength of the cross section filled reinforcement. Cracks of the separation panel - which may be caused by its limited resistance to shrinkage, to thermal expansion and to contraction due to a temperature change - is minimized thanks to reinforcements such as beams, thanks to the addition of an isolation material or of concrete in the separation panel, etc.. Indeed, the filling medium of the separation panel then withstands all the stresses generated in the separation panel. In other words, the risk of cracks will be minimised by reducing the limitation on the free expansion of the separation panel. Stresses in the separation panel are also minimized as the separation panel comprises walls extending along the longitudinal and the traverse directions that provide movements of joints or create interposition in the separation panel, thereby reducing stresses in the separation panel. When a separation panel comprises a filling material at a high temperature, stresses caused by difference in temperature between the inside and the outside of the separation panel will also be minimized as the material in the separation panel can withstand temperature changes and stresses induced in the separation panel as a whole.

According to an optional aspect of the invention, the step of filling the separation panel further comprises:
- puncturing with an injection needle the sidewall of one of the semi-panels from the outer surface to the inner surface at a position of an inside cavity; and
- injecting the fire resistant material or the fire retardant material in the inside cavity.

This way, the fire resistant material or the fire retardant material is injected in an inside cavity of the separation panel such that the material spreads in the inside cavity and completely fills the inside cavity. As inside cavities may be connected through openings in the partitions walls along the longitudinal and/or the traverse direction of the separation panel, the fire resistant material or the fire retardant material injected in an inside cavity may spread to inside cavities of the separation panel connected to the inside cavity, thereby filling the separation panel with fire resistant or fire retardant material. By piercing the sidewall of a semi-panel at different locations and injecting the fire resistant orfire retardant material in several inside cavities, the method ensures the material is spread in the separation panel and therefore improves the overall fire resistance of the separation panel.

According to an optional aspect of the invention, the method further comprises the step of filling the separation panel at least partially with concrete.

Concrete is a composite material composed of aggregates bonded together with a fluid cement, such as Portland cement mixed with water, which hardens over time. Sand, natural gravel, crushed stone, rocks, etc. are examples of aggregates used in the composition of concrete. Portland cement for example comprises a mixture of calcium silicates, aluminates and ferrites, i.e. compounds which combine calcium, silicon, aluminium and iron in forms which will react with water. Alternatively, concrete comprises hydraulic cements, such as calcium aluminate cements comprising hydraulic calcium aluminates.

This way, separation panels manufactured with the method according to the present invention demonstrate improved mechanical strength and can be used in construction as construction members. According to the present invention, a separation panel may be delivered at construction site where a construction is to be built using the separation panel and the separation panel can be filled with concrete directly at the location of the construction site where it is required. This way, a separation panel filled with concrete must not be transported, which saves effort and transportation costs. Alternatively, a separation panel according to the present invention is filled with concrete before delivery to a construction site. Alternatively, a construction panel according to the present invention is used to cast foundations of constructions such as for example beams or tubes or grids. The two semi-panels are positioned such that they cast the foundations of constructions that fit in the openings of the semi-panels for example, and the two semi-panels are then welded together. Additionally, the resulting separation panel may be filled with concrete or any other material, thereby casting the foundations of the construction in the separation panel.

According to an optional aspect of the invention, the step of filling said separation panel comprises:
- producing one of the longitudinal walls or one of the traverse walls of at least one of the two semi-panels with an opening;
- adding concrete in the separation panel through the opening;
- allowing the concrete to set; and
- closing the opening in the longitudinal or traverse walls.

This way, the method comprises manufacturing a separation panel in a practical manner. Indeed, the separation panels are manufactured, are then transported to the location where they have to be installed, and are then at least partially filled with concrete. This way, heavy separation panels at least partially filled with concrete must not be moved around before reaching their final destination.

According to an optional aspect of the invention, the step of welding the two semi-panels together comprises soldering.

This way, the junction between the two semi-panels of the separation panel is smooth. Alternatively, the step of welding the two semi-panels together comprises one or more of the following: mirror soldering, high frequency soldering, infrared soldering, specular soldering, etc.. According to the present invention, the two semi-panels are welded together when the two semi-panels are positioned horizontally such that both the longitudinal and the traverse directions are horizontal. This way, gravity is uniformly distributed across the sidewalls of the two semi-panels. Alternatively, the two semi-panels are welded together when the two semi-panels are positioned vertically such that the longitudinal direction of the separation panel is vertical and such that the traverse direction is horizontal.

According to an optional aspect of the invention, the method further comprises inserting a ballast in the openings before the two semi-panels are welded together.

This way, the method further comprises ballasting a separation panel by adding one or more ballast in the openings before the two semi-panels are welded together, wherein the ballast extends in connected inside cavities along the longitudinal and/or the traverse direction of the separation panel. This way, the number of fixations of a separation panel to the ground can also be minimized. Indeed, the method may comprise inserting a ballast in the openings wherein the ballast extends through an opening out of the separation panel longitudinally or along the traverse direction. The method may further comprise the step of fixing the ballast to the ground, thereby fixing the separation panel to the ground and minimizing the number of fixations of the separation panel to the ground.

If the separation panel is adapted to be used as a construction wall of a pressurized construction, such as a liquid or a gas tank for example, and if the separation panel is directly resting on the ground, the longitudinal walls and the traverse walls of the separation panel can be reinforced without any direct interference with the tank. The ballast is positioned inside the separation panel and will reinforce the separation panel from the inside and will increase the nominal resistance which needs to be provided to the separation panel, in order to carry the load. Additionally, as the ballast is inserted in the separation panel, the ballast is protected from the influence of outside conditions, for example the ballast is less subject to corrosion. When the separation panel is filled with concrete or with an insulating material, and/or when a ballast is inserted in the separation panel, the bending moments at the junction between the walls of the separation panel and the ground can be taken into account as any direct forces which will be transferred to the filling material of the separation panel and/or to the reinforcements such as the ballast.

Alternatively, the method further comprises inserting one or more metallic beams or metallic bars in the separation panel in the openings before the two semi-panels are welded together, for example iron beams. Alternatively, the method further comprises inserting one or more metallic tubes in the separation panel in the openings before the two semi-panels are welded together, for example iron tubes. Alternatively, the method further comprises inserting a net of metallic beams in the separation panel in the openings before the two semi-panels are welded together, for example a net of iron beams. Alternatively, the method further comprises inserting one or more of the following: a ballast, one or more metallic beams or bars, one or more metallic tubes, a net of metallic beams, etc. in the openings after the two semi-panels are welded together. Alternatively, the method further comprises inserting one or more fibre glass and/or composite beams, or tubes or bars in the openings before the two semi-panels are welded together. The one or more ballasts may be inserted in the openings of the partition walls such that the one or more ballasts extend through one or more inside cavities along the longitudinal direction and/or along the traverse direction of the separation panel. According to the present invention, the ballast is completely comprised in the separation panel. Alternatively, the ballast extends out of the separation panel. Alternatively, the method further comprises inserting a feeding probe for animals in an enclosure for livestock in the openings after the two semi-panels are welded together such that one end of the feeding probe exits the separation panel. This way, the feeding probe is protected in the separation panel, which guarantees the outer surface of the feeding probe is not contaminated by contact with the animals, thereby ensuring hygiene in the process of feeding the animals.

According to an optional aspect of the invention, the synthetic material is thermoplastic.

This way, separation panels manufactured according to the method of the invention are washable, resistant to scratches and hygienic. Additionally, the separation panel do not require to be coated in order to become hygienic, which ensures the method of manufacturing remains simple. According to the present invention, thermoplastic is for example Polyethylene, referred to as PE, or Polypropylene, referred to as PP, or any thermoplastic, or any thermoplastic comprising for example additives.

According to a second aspect of the invention, there is provided a separation panel made of a synthetic material, the separation panel comprising two semi-panels, wherein the two semi-panels are produced by injection moulding using a mould and are therefore identical, and wherein each of the two semi-panels comprises:
- a sidewall comprising an inner surface and an outer surface;
- a pair of parallel longitudinal walls extending from the inner surface and a pair of parallel traverse walls extending from the inner surface;
wherein both semi-panels further comprise a symmetric plurality of partition walls extending from the inner surface, wherein:
- the partition walls are adapted to delimitate inside cavities in each of the semi-panels; and
- one or more of the partition walls comprise respective openings extending through the partition walls;
and wherein the two semi-panels are:
- arranged one against the other along the longitudinal walls and the traverse walls such that the inner surfaces of said sidewalls face each other and such that the partition walls of one of the semi-panels are in direction contact with the partition walls of the other semi-panel when the two semi-panels are arranged one against the other, thereby forming a structure with a plurality of inside cavities connected through the openings; and
- welded together along said longitudinal walls and the traverse walls, thereby forming the separation panel as a closed structure.

Injection moulding both semi-panels ensures the outer surfaces of the sidewalls of the semi-panels are smooth and without irregularities, such as protrusions and/or recesses, and the semi-panels are resistant to scratches. This way, the risk that animals hurt themselves on the separation panels and the risk that dirt accumulates on the separation panels are minimized. Additionally, a closed structure comprising inside cavities connected to each other through the openings along the longitudinal direction and/or along the traverse direction of the separation panel is manufactured. Manufacturing a closed structure ensures dirt does not enter and accumulate in the separation panel. Separation panels according to the present invention can be cleaned thoroughly and are therefore highly hygienic for uses in enclosures for livestock.

Separation panels according to the present invention with connected inside cavities through the openings demonstrate improved mechanical strength compared to separation panels which comprise inside cavities which are not connected along their longitudinal directions and/or their traverse directions. In other words, the mesh of inside cavities connected along the longitudinal direction and/or the traverse direction of a separation panel improves the bend, tensile, shear and compression strengths of the corresponding panel. A separation panel according to the present invention is therefore more mechanically resistant and can withstand larger pressures and tensions without bending and/or tearing.

Injection moulding both semi-panels allows manufacturing separation panels in a synthetic material such as for example a polymer material, a thermoplastic, etc.. To each type of semi-panel comprises an injection moulding mould which is re-used to manufacture semi-panels in series. The two semi-panels are symmetrical. For example, a separation panel manufactured according to the present invention may comprise a semi-panel comprising inside cavities with partition walls comprising respective openings and a semi-panel which does not comprise inside cavities. Alternatively, a separation panel manufactured according to the present invention may comprise a semi-panel comprising inside cavities with partition walls comprising respective openings and a semi-panel which comprises inside cavities with partition walls which do not comprise openings. Alternatively, a separation panel manufactured according to the present invention may comprise a semi-panel comprising inside cavities with partition walls comprising respective openings and a semi-panel which comprises inside cavities which coincide with inside cavities of the first semi-panel and with partition walls which comprises openings. A separation panel according to the present invention can be fixed to the ground such that the separation panel rests on the ground along its traverse direction or its longitudinal direction, or such that the separation panel is inserted in the ground along its traverse direction or along its longitudinal direction. Alternatively, a separation panel according to the present invention is adapted to be positioned on a construction such that the separation panel is positioned above the ground not in contact with the ground. The design of a separation panel according to the present invention is such that the separation panel is sufficiently strong and effective by combining a strong integrated concept which fulfils the combination of lightness and hygiene. A separation panel according to the present invention demonstrates improved mechanical properties while being designed thanks to well-known calculation principles, which guarantees the production process remains simple.

According to the present invention, the partition walls comprise respective openings extending through the partition walls. Alternatively, the partition walls comprise respective recesses. In other words, an inside cavity is defined by partition walls which each comprise a inner wall surface facing the inside cavity and an outer wall surface facing away from the inside cavity, and partition walls may comprise respective indentations defined on the inner wall surfaces and/or on the outer wall surfaces. The respective openings of the partition walls according to the present invention are rectangular. For example the openings are square. According to the present invention, the openings of the partition walls of a semi-panel are identical. Alternatively, the openings of the partition walls of a semi-panel are a combination of several shapes, for example rectangles, circles, rhombuses, etc.. According to the present invention, partition walls of the semi-panel comprise one opening. Alternatively, each partition wall of the semi-panel comprises more than one openings.

According to an optional aspect of the invention, the partition walls are longitudinal and/or travers partition walls extending from the inner surface.

According to an optional aspect of the invention, the inside cavities are connected along the longitudinal direction and/or along the traverse direction through the openings.

According to an optional aspect of the invention, when each of the two semi-panels comprises a pair of parallel longitudinal walls extending from said inner surface and a pair of parallel traverse walls extending from said inner surface, the structure is a closed structure with a plurality of inside cavities connected through the openings.

According to an optional aspect of the invention, the plurality of inside cavities covers the inner surface of the sidewall completely.

Both semi-panels of the separation panel comprise a symmetric plurality of partition walls such that the partition walls of one of the semi-panels are in direct contact with the partition walls of the other semi-panel of said separation panel when the two semi-panels are arranged one against the other.

This way, a mesh of inside cavities is formed in the separation panel such that the inside cavities are delimited by partition walls extending half from the inner surface of the sidewall of one semi-panel and by partition walls extending half from the inner surface of the sidewall of the other semi-panel.

According to an optional aspect of the invention, the sidewalls of the two semi-panels are oblong.

According to an optional aspect of the invention, the separation panel is further adapted to be used in a cattle pen or in an enclosure for livestock.

According to an optional aspect of the invention, the sidewalls of the two semi-panels comprise a plurality of transversal openings adapted to face each other when the two semi-panels are arranged one against the other.

This way, when the separation panels are used in cattle pens, the animals can experience better living conditions thanks to the transversal openings in the separation panels. For example, animals get fresh air thanks to the transversal openings, they can also see animals standing on the other side of the separation panel which may have an effect on their stress, and they might pass their heads through the transversal openings in order to reach for food.

According to an optional aspect of the invention, the cross section is circular and each transversal opening is delimited by walls having a convex cross-section, and the walls are bent towards one another and are connected to one another so that they give the walls a convex cross section.

According to an optional aspect of the invention, each of the openings has an oblong shape whose end portions have a mainly semi-circular shape and wherein each of the openings mainly extends vertically.

According to an optional aspect of the invention, at least one semi-panel of the two semi-panels further comprises a plurality of longitudinal and/or traverse partition walls extending from the inner surface, wherein:
- the partition walls are adapted to delimitate inside cavities in the semi-panel; and
- one or more of said partition walls of the inside cavities delimited above and under the transversal openings in the separation panel comprise respective openings extending through the partition walls.

This way, the mechanical strength of a separation panel is ensured as the transversal openings are reinforced by inside cavities delimited by partition walls which do not comprise openings. Above and below the transversal openings, the separation panel comprises inside cavities delimited by partition walls comprising respective openings, and the separation panel can there be at least partially filled with either a fire resistant or fire retardant material or with concrete.

### Brief Description of the Drawings

Fig. 1 schematically illustrates an embodiment of a semi-panel according to the present invention comprising inside cavities connected along the longitudinal direction.
Figs. 2A to 2F schematically illustrate a top view, a perspective view, and side views of cross-sections of an embodiment of a semi-panel according to the present invention comprising inside cavities connected along the longitudinal direction.
Fig. 3 schematically illustrates an embodiment of a semi-panel according to the present invention comprising inside cavities connected along the longitudinal direction and along the traverse direction.
Figs. 4A to 4G schematically illustrate a top view, a perspective view, and side views of cross-sections of an embodiment of a semi-panel according to the present invention comprising inside cavities connected along the longitudinal direction and along the traverse direction.
Fig. 5B schematically illustrates an exploded view of a separation panel according to the present invention comprising two symmetric semi-panels, each semi-panel comprising inside cavities connected along the longitudinal direction and along the traverse (Fig. 5A does not exist.).
Fig. 6A schematically illustrates an exploded view of a separation panel according to the present invention comprising a fire resistant material or a fire retardant material. Fig. 6B schematically illustrates an exploded view of a separation panel according to the present invention comprising concrete.
Fig. 7 schematically illustrates a top view of a semi-panel according to the present invention comprising inside cavities delimited by partition walls comprising openings in which a ballast is inserted.
Fig. 8 schematically illustrates a separation panel comprising a plurality of transversal openings.
Fig. 9 illustrates the steps of the method according to the present invention for manufacturing a separation panel.
Figs. 10A and 10B schematically illustrate a top view and a perspective view of an embodiment of a semi-panel according to the present invention comprising inside cavities connected along the longitudinal direction and along the traverse direction.
Figs. 11A and 11B schematically illustrate a top view and a perspective view of an embodiment of a semi-panel according to the present invention comprising inside cavities connected along the longitudinal direction and along the traverse direction.
Figs. 12A to 12C schematically illustrate a top view and side views of cross-sections of an embodiment of a semi-panel according to the present invention comprising inside cavities connected along the longitudinal direction and along the traverse direction, wherein the openings in the partition walls are semi-rectangular.
Figs. 13A to 13E schematically illustrate a top view, a perspective view and side views of cross-sections of an embodiment of a rectangular semi-panel according to the present invention comprising inside cavities connected along the longitudinal direction and along the traverse direction, wherein the openings in the partition walls are semi-rectangular.
Figs. 14A to 14D schematically illustrate a top view, a perspective view and side views of cross-sections of an embodiment of a rectangular semi-panel according to the present invention comprising inside cavities connected along the longitudinal direction and along the traverse direction, wherein the openings in the partition walls are semi-rectangular.
Figs. 15A to 15D schematically illustrate a top view, a perspective view and a side view of a cross-section of an embodiment of a semi-panel according to the present invention comprising inside cavities connected along the longitudinal and along the traverse direction, wherein the semi-panel comprises mechanical support partition walls.
Figs. 16A to 16C schematically illustrate a top view and side views of cross-sections of an embodiment of a semi-panel according to the present invention comprising inside cavities connected along the longitudinal and along the traverse direction, wherein the openings in the partition walls are semi-circular.
Figs. 17A to 17C schematically illustrate a top view and side views of cross-sections of an embodiment of a semi-panel according to the present invention comprising mechanical support partition walls along the traverse direction and along the longitudinal direction.
Figs. 18A to 18C schematically illustrate a top view and side views of cross-sections of an embodiment of a semi-panel according to the present invention comprising mechanical support partition walls along a diagonal direction, i.e. tilted with respect to the longitudinal direction or the traverse direction.
Figs. 19A to 19D schematically illustrate a top view, a perspective view and a side view of a cross-section of an embodiment of a semi-panel according to the present invention comprising partition walls which comprise traverse extensions at the openings.
Figs. 20A to 20D schematically illustrate a top view, a perspective view and a side view of a cross-section of an embodiment of a semi-panel according to the present invention comprising partition walls which comprise tilted extensions.
Figs. 21A to 21C schematically illustrate a top view and side views of cross-sections of an embodiment of a semi-panel according to the present invention comprising a pair of parallel longitudinal walls but not comprising a pair of parallel traverse walls.
Figs. 22A to 22C schematically illustrate a top view and side views of cross-sections of an embodiment of a semi-panel according to the present invention comprising a pair of parallel traverse walls but not comprising a pair of parallel longitudinal walls.
Figs. 23A and 23B schematically illustrate a top view and a perspective view of an embodiment of a semi-panel according to the present invention comprising circular partition walls delimiting inside cavities connected along the longitudinal direction and along the traverse direction.
Figs. 24A and 24B schematically illustrate a top view and a perspective view of an embodiment of a semi-panel according to the present invention comprising circular partition walls delimiting inside cavities connected along the longitudinal direction and along the traverse direction.
Figs. 25A and 25B schematically illustrate a top view and a perspective view of an embodiment of a semi-panel according to the present invention comprising hexagonal partition walls delimiting inside cavities connected along the longitudinal direction and along the traverse direction.
Figs. 26A and 26B schematically illustrate a top view and a perspective view of an embodiment of a semi-panel according to the present invention comprising partition walls tilted with respect to the longitudinal direction or the traverse direction delimiting inside cavities connected along the longitudinal direction and along the traverse direction.
Figs. 27A and 27B schematically illustrate a top view and a perspective view of an embodiment of a semi-panel according to the present invention comprising partition walls tilted with respect to the longitudinal direction or the traverse direction delimiting inside cavities connected along the longitudinal direction and along the traverse direction.
Figs. 28A and 28B schematically illustrate a top view and a perspective view of an embodiment of a semi-panel according to the present invention comprising partition walls tilted with respect to the longitudinal direction or the traverse direction delimiting inside cavities connected along the longitudinal direction and along the traverse direction.
Figs. 29A and 29B schematically illustrate a top view and a perspective view of an embodiment of a semi-panel according to the present invention comprising partition walls tilted with respect to the longitudinal direction or the traverse direction delimiting inside cavities connected along the longitudinal direction and along the traverse direction.
Figs. 30A and 30B schematically illustrate a top view and a perspective view of an embodiment of a semi-panel according to the present invention comprising patterned partition walls delimiting inside cavities connected along the longitudinal direction and along the traverse direction.
Figs. 31A and 31B schematically illustrate a top view and a perspective view of an embodiment of a semi-panel according to the present invention comprising partition walls tilted with respect to the longitudinal direction or the traverse direction delimiting inside cavities connected along the longitudinal direction and along the traverse direction.
Figs. 32A and 32B schematically illustrate a top view and a perspective view of an embodiment of a semi-panel according to the present invention comprising semi-circular partition walls delimiting inside cavities connected along the longitudinal direction and along the traverse direction.
Figs. 33A and 33B schematically illustrate a top view and a perspective view of an embodiment of a semi-panel according to the present invention comprising semi-circular partition walls delimiting inside cavities connected along the longitudinal direction and along the traverse direction.
Figs. 34A and 34B schematically illustrate a top view and a perspective view of an embodiment of a semi-panel according to the present invention comprising semi-circular partition walls delimiting inside cavities connected along the longitudinal direction and along the traverse direction.

### Detailed Description of Embodiment(s)

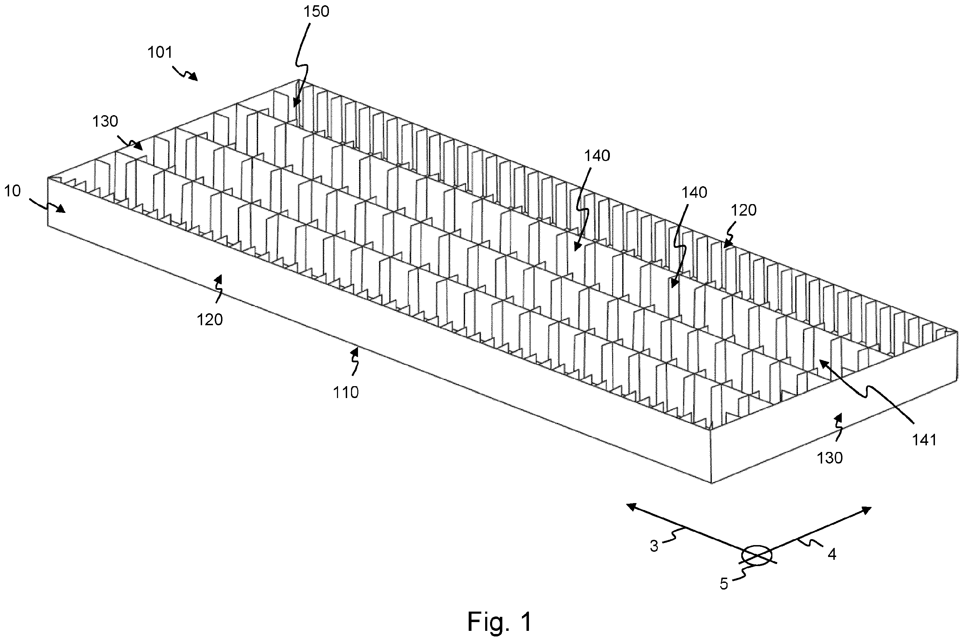

According to an embodiment shown in Fig. 1, a longitudinal direction 3 is defined, a traverse direction 4 is defined and a depth direction 5 is defined. According to an embodiment shown in Fig. 1, a semi-panel 101 is made of synthetic material 10 and comprises a sidewall 110 with an inner surface and an outer surface. The semi-panel 101 further comprises a pair of parallel longitudinal walls 120 extending from the inner surface of the sidewall 110 and a pair of traverse walls 130 extending from the inner surface of the sidewall 110 along the depth direction 5. The semi-panel 101 comprises a plurality of longitudinal and traverse partition walls 140 extending from the inner surface of the sidewall 110 along the depth direction 5. According to the embodiment depicted in Fig. 1, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 1, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 1, the inner surface of the sidewall 110 of the semi-panel 101 is completely covered with inside cavities 150. In other words, the inside cavities 150 completely cover the inner surface of the sidewall 110 of the semi-panel 101. According to an alternative embodiment, a plurality of inside cavities partially cover the inner surface of the sidewall 110 of the semi-panel 101. For example, the thickness of a semi-panel 101 along the depth direction 5 is 5cm, 10cm, 20cm, 40cm, 60 cm, 80cm, 100cm, etc.. For example, a semi-panel 101 has the following dimensions: 50cm x 100cm, or 100cm x 150cm, etc..

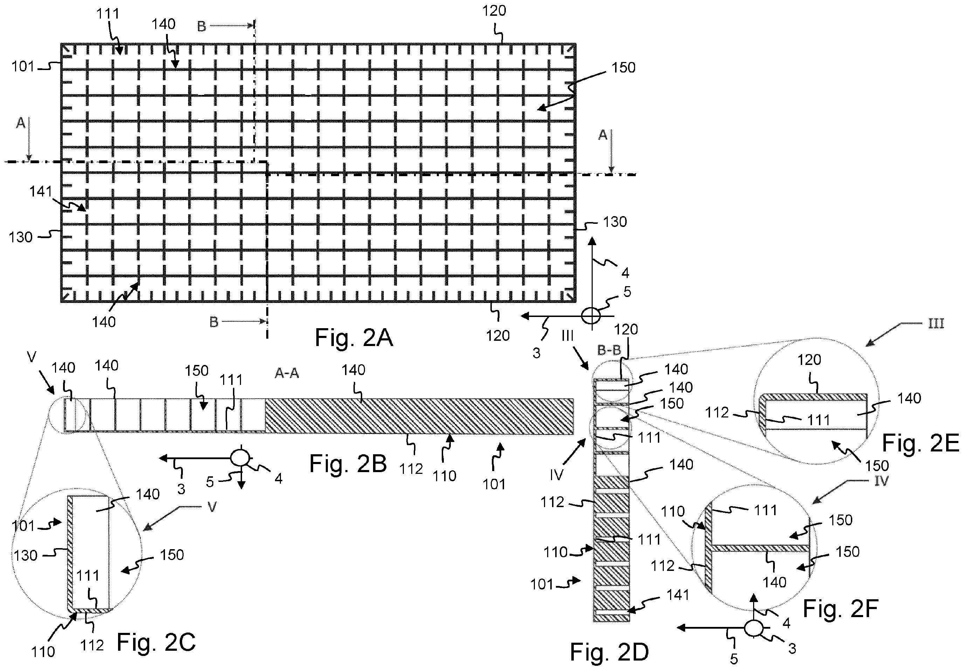

According to an embodiment shown in Fig. 2A, a longitudinal direction 3 is defined, a traverse direction 4 is defined and a depth direction 5 is defined. According to an embodiment shown in Fig. 2A, a top view of a semi-panel 101 of Fig. 1 is depicted. Components having identical reference numbers to components in Fig. 1 perform the same function. According to an embodiment shown in Fig. 2A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 2A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 2A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 2A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially cover the inner surface 111 of the sidewall 110 of the semi-panel 101. Fig. 2B is a side view of a cross-section of the semi-panel 101 of Fig. 2A along the A-A lines depicted on Fig. 2A along the longitudinal direction 3. The sidewall 110 of the semi-panel 101 is continuous along the longitudinal direction 3 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. Detail V of Fig. 2B is zoomed in on Fig. 2C. A partition wall 140 extends from a traverse wall 130 on Fig. 2C, thereby partially delimitating an inside cavity 150. Fig. 2D is a side view of a cross-section of the semi-panel 101 of Fig. 2A along the B-B lines depicted on Fig. 2A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. Detail III of Fig. 2D is zoomed in on Fig. 2E. A partition wall 140 extends from a longitudinal wall 120 on Fig. 2E, thereby partially delimitating an inside cavity 150.

According to an embodiment shown in Fig. 3, a longitudinal direction 3 is defined, a traverse direction 4 is defined and a depth direction 5 is defined. Components having identical reference numbers to components in Fig. 1 perform the same function. According to an embodiment shown in Fig. 3, a semi-panel 101 is made of synthetic material 10 and comprises a sidewall 110 with an inner surface and an outer surface. The semi-panel 101 further comprises a pair of parallel longitudinal walls 120 extending from the inner surface of the sidewall 110 and a pair of traverse walls 130 extending from the inner surface of the sidewall 110 along the depth direction 5. The semi-panel 101 comprises a plurality of longitudinal and traverse partition walls 140 extending from the inner surface of the sidewall 110 along the depth direction 5. According to the embodiment depicted in Fig. 3, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 3, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 3, the inner surface of the sidewall 110 of the semi-panel 101 is completely covered with inside cavities 150. In other words, the inside cavities 150 completely cover the inner surface of the sidewall 110 of the semi-panel 101. According to an alternative embodiment, a plurality of inside cavities partially cover the inner surface of the sidewall 110 of the semi-panel 101. For example, the thickness of a semi-panel 101 along the depth direction 5 is 5cm, 10cm, 20cm, 40cm, 60 cm, 80cm, 100cm, etc.. The inside cavities 150 of the semi-panel 101 have for example the following dimensions: 50mm x 50mm, or 50mm x 100mm, or 40mm x 40mm, or 30mm x 30mm. For example, a semi-panel 101 has the following dimensions: 50cm x 100cm, or 100cm x 150cm, etc..

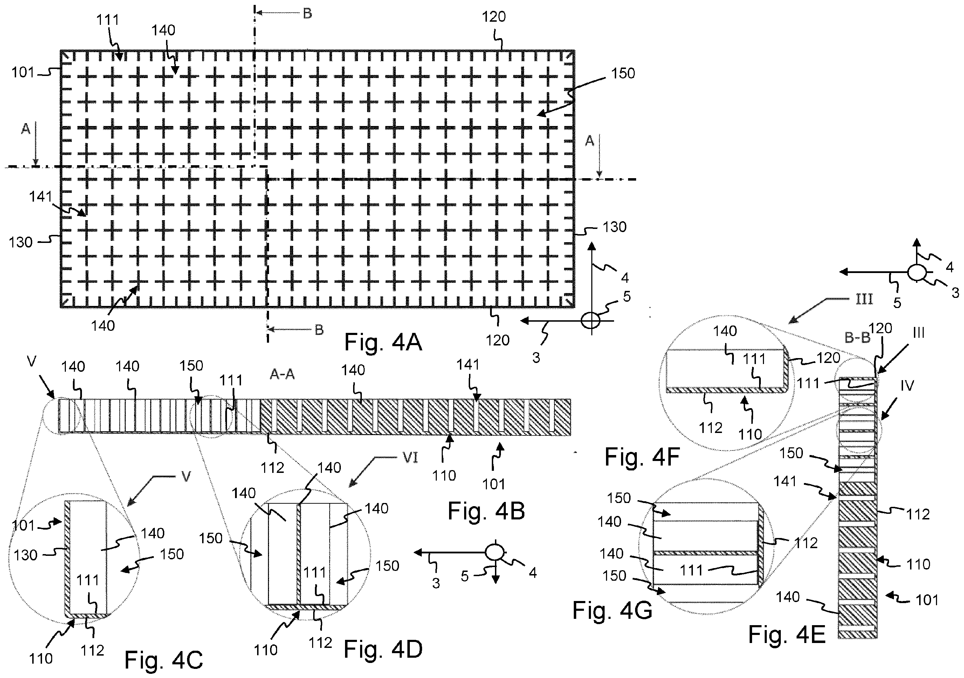

According to an embodiment shown in Fig. 4A, a longitudinal direction 3 is defined, a traverse direction 4 is defined and a depth direction 5 is defined. According to an embodiment shown in Fig. 4A, a top view of a semi-panel 101 of Fig. 3 is depicted. Components having identical reference numbers to components in Fig. 3 perform the same function. According to an embodiment shown in Fig. 4A, a semi-panel 101 is made of synthetic material 10 and comprises a sidewall 110 with an inner surface 111 and an outer surface. The semi-panel 101 further comprises a pair of parallel longitudinal walls 120 extending from the inner surface of the sidewall 110 and a pair of traverse walls 130 extending from the inner surface of the sidewall 110 along the depth direction 5. The semi-panel 101 comprises a plurality of longitudinal and traverse partition walls 140 extending from the inner surface of the sidewall 110 along the depth direction 5. According to the embodiment depicted in Fig. 3, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 3, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 3, the inner surface of the sidewall 110 of the semi-panel 101 is completely covered with inside cavities 150. In other words, the inside cavities 150 completely cover the inner surface of the sidewall 110 of the semi-panel 101. According to an alternative embodiment, a plurality of inside cavities partially cover the inner surface of the sidewall 110 of the semi-panel 101. Fig. 4B is a side view of a cross-section of the semi-panel 101 of Fig. 4A along the A-A lines depicted on Fig. 4A along the longitudinal direction 3. The sidewall 110 of the semi-panel 101 is continuous along the longitudinal direction 3 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. Detail V of Fig. 4B is zoomed in on Fig. 4C. A partition wall 140 extends from a traverse wall 130 on Fig. 4C, thereby partially delimitating an inside cavity 150. Detail VI of Fig. 4B is zoomed in on Fig. 4D. A longitudinal partition wall 140 extends from the inner surface 111 of the sidewall 110 of the semi-panel 101 on Fig. 4D and a traverse partition wall 140 extends from the inner surface 111 of the sidewall 110 of the semi-panel 101 on Fig. 4D. The longitudinal partition wall 140 is perpendicular to the traverse partition wall 140 on Fig. 4D, thereby partially delimitating two inside cavities 150, one on each side of the traverse partition wall 140. Fig. 4E is a side view of a cross-section of the semi-panel 101 of Fig. 4A along the B-B lines depicted on Fig. 4A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. Detail III of Fig. 4E is zoomed in on Fig. 4F. A partition wall 140 extends from a longitudinal wall 120 on Fig. 2E, thereby partially delimitating an inside cavity 150. Detail IV of Fig. 4E is zoomed in on Fig. 4G. A longitudinal partition wall 140 extends from the inner surface 111 of the sidewall 110 of the semi-panel 101 on Fig. 4G and a traverse partition wall 140 extends from the inner surface 111 of the sidewall 110 of the semi-panel 101 on Fig. 4G. The longitudinal partition wall 140 is perpendicular to the traverse partition wall 140 on Fig. 4G, thereby partially delimitating two inside cavities 150, one on each side of the traverse partition wall 140.

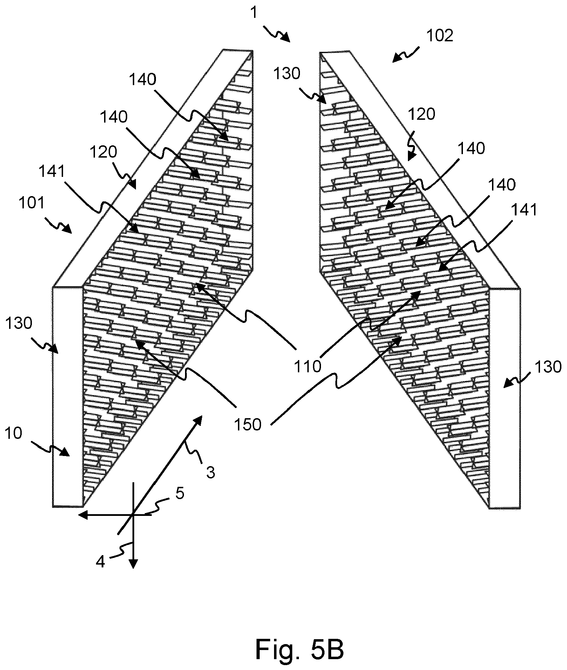

Fig. 5B schematically illustrates an exploded view of a separation panel according to the present invention wherein a longitudinal direction 3 is defined, a traverse direction 4 is defined and a depth direction 5 is defined. Components having identical reference numbers to components in Fig. 3 perform the same function. The separation panel comprises two semi-panels 101;102 made of synthetic material 10 and injection moulded. Each of the semi-panels 101;102 comprises a sidewall 110 comprising an inner surface and an outer surface. Each of the semi-panels 101;102 further comprises a pair of parallel longitudinal walls 120 extending from the inner surface of the sidewall 110 and a pair of parallel traverse walls 130 extending from the inner surface of the sidewall 110. Each of the semi-panels 101;102 comprises a plurality of longitudinal and traverse partition walls 140 extending from the inner surface of the sidewall 110. The partition walls 140 delimitate inside cavities 150 in the semi-panel 101. The partition walls 140 comprise respective openings 141 extending through the partition walls 140 such that a plurality of inside cavities 150 are connected along the longitudinal direction 3 and along the traverse direction 4 through the openings 141. The two semi-panels 101;102 are welded together along the longitudinal walls 120 and along the traverse walls 130 such that the inner surfaces of the semi-panels 101;102 face each other, thereby forming a closed structure with a plurality of inside cavities connected along the longitudinal direction 3 and along the traverse direction 4, thereby forming the separation panel 1. For example, a separation panel 1 complies with the requirements of the European Norm 12537 for not pressurized and pressurized constructions. For example, the thickness of a semi-panel 101;102 along the depth direction 5 is 5cm, 10cm, 20cm, 40cm, 60 cm, 80cm, 100cm, etc.. The semi-panels 101;102 of the separation panel 1 of Fig. 5B have the same thickness.

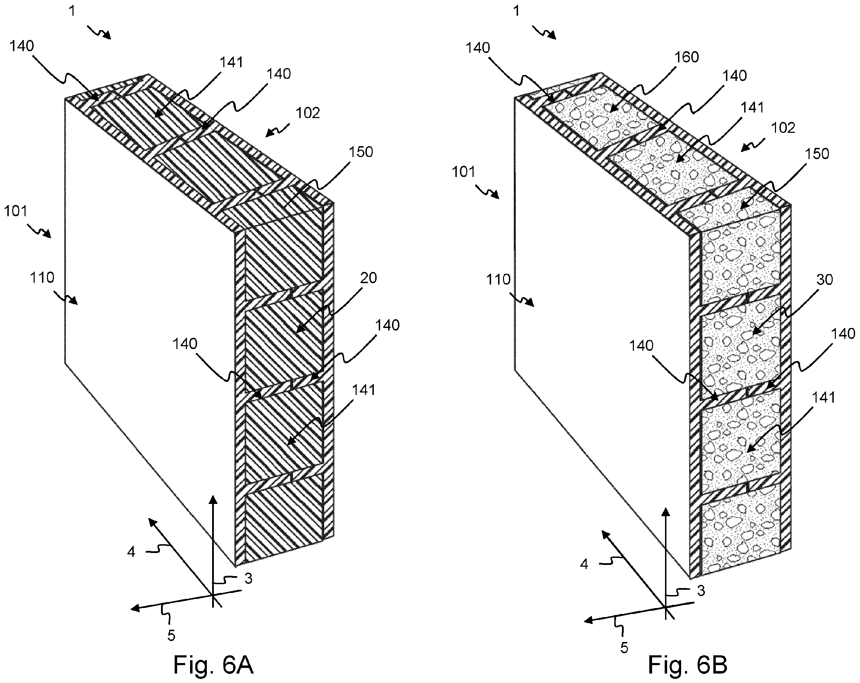

According to an embodiment shown in Fig. 6A, a longitudinal direction 3 is defined, a traverse direction 4 is defined and a depth direction 5 is defined. Components having identical reference numbers to components in Fig. 3 perform the same function. According to an embodiment shown in Fig. 6A, a separation panel 1 comprises two semi-panels 101;102. Each semi-panel 101;102 comprises a sidewall 110 and a plurality of longitudinal and traverse partition walls 140 extending from the respective inner surface of the semi-panels 101;102. The partition walls 140 comprise openings 141 extending through the partition walls 140. The two semi-panels 101;102 are arranged one against the other along the partition walls 140 such that the inner surfaces of the sidewalls 110 face each other, thereby forming a closed structure with a plurality of inside cavities connected along the longitudinal direction 3 and along the traverse direction 4 through the openings 141. The two semi-panels 101;102 are welded together along the partition walls 140. The separation panel 1 further comprises a fire resistant material 20 or a fire retardant material 21. The separation panel 1 of Fig. 6A is completely filled with fire resistant material 20 or fire retardant material 21. For example, the separation panel 1 is filled for example with PIR for Polyisocyanurate, or with phenol. According to an alternative embodiment, the separation panel 1 is partially filled with fire resistant material 20 or fire retardant material 21. The sidewalls 110 of one or the two semi-panels 101;102 is punctured with an injection needle from the outer surface to the inner surface of the sidewall 110 at a position of an inside cavity 150. The fire resistant material 20 or fire retardant material 21 is then injected in the inside cavity 150. This method step is then repeated for one or more additional inside cavities 150, thereby partially or fully filling the separation panel 1 with fire resistant material 20 or fire retardant material 21. For example, the resistance of a separation panel 1 to heat is indicated by a calculation of its R-value. A R-value is indicative for the resistance of the separation panel to heat transfer. For example, a separation panel 1 according to the present invention made in PP 50 and which comprises inside cavities with dimensions of 50x50x50cm3 demonstrates a R-value of 0.59. For example, a panel 1 according to the present invention made in PP 50 and which comprises inside cavities with dimensions of 50x100x50cm3 demonstrates a R-value of 0.56. For example, a panel 1 according to the present invention which comprises inside cavities with dimensions of 50x50x20cm3 demonstrates a R-value of 0.50. According to an embodiment shown in Fig. 6B, a longitudinal direction 3 is defined, a traverse direction 4 is defined and a depth direction 5 is defined. According to an embodiment shown in Fig. 6B, a separation panel 1 comprises two semi-panels 101;102. Each semi-panel 101;102 comprises a sidewall 110 and a plurality of longitudinal and traverse partition walls 140 extending from the respective inner surface of the semi-panels 101;102. The partition walls 140 comprise openings 141 extending through the partition walls 140. The two semi-panels 101;102 are arranged one against the other along the partition walls 140 such that the inner surfaces of the sidewalls 110 face each other, thereby forming a closed structure with a plurality of inside cavities connected along the longitudinal direction 3 and along the traverse direction 4 through the openings 141. The two semi-panels 101;102 are welded together along the partition walls 140. The separation panel 1 further comprises concrete 30. The separation panel 1 of Fig. 6B is completely filled with concrete 30. According to an alternative embodiment, the separation panel 1 is partially filled with concrete 30. One or more partition walls 140 comprise a filling opening 160. Concrete 30 is added in the separation panel 1 through the filling opening 160. The method further comprises allowing the concrete 30 to set and closing the filling opening 160 in the partition walls 140. The separation panel 1 of Fig. 6B is fully filled with concrete 30. According to an alternative embodiment, the separation panel 1 of Fig. 6B is partially filled with concrete 30. The concrete 30 used to fill the separation panel 1 of Fig. 6B comprises for example concrete, water, and polystyrene granules, etc..

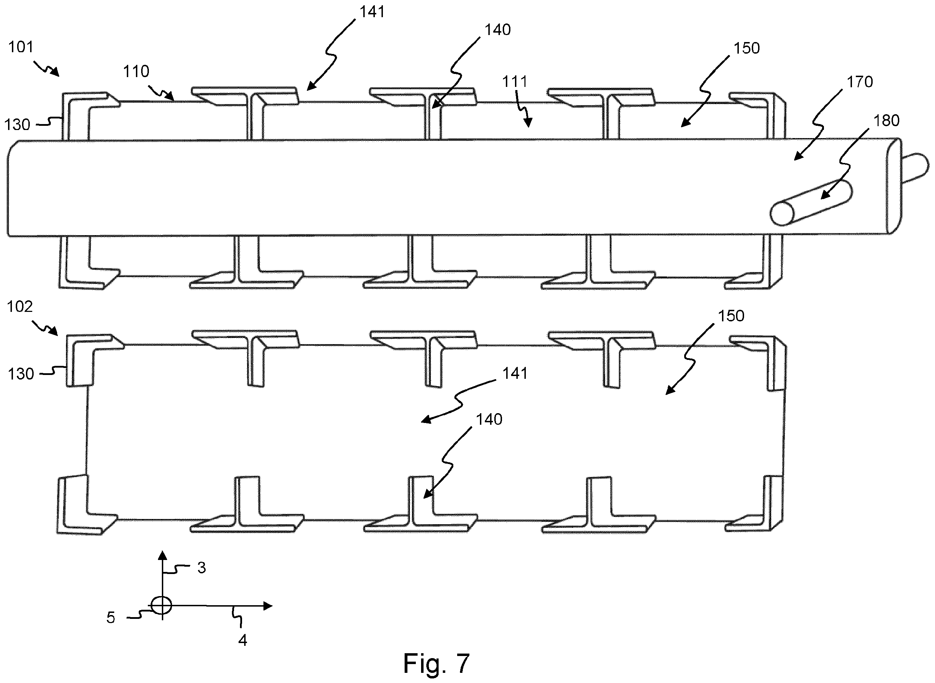

According to an embodiment shown in Fig. 7, a longitudinal direction 3 is defined, a traverse direction 4 is defined and a depth direction 5 is defined. Components having identical reference numbers to components in Fig. 3 perform the same function. A semi-panel 101 comprises a sidewall 110 which comprises an inner surface 111. A semi-panel 102 comprises a sidewall 110 which comprises an inner surface 111. The semi-panel 101 comprises longitudinal and traverse partition walls 140 comprising respective openings 141 extending through the partition walls 140 such that the partition walls 140 delimitate inside cavities 150 in the semi-panel 101 connected along the longitudinal direction 3 and along the traverse direction 4 through the openings 141. A ballast 170 is inserted in the openings 141 along the traverse direction before the two semi-panels 101;102 are welded together, thereby forming the separation panel. A fixation 180 is inserted in the ballast 170 along the depth direction 5 in order to fix the separation panel to another separation panel and/or to the ground. According to an alternative embodiment, the fixation 180 is inserted in the ballast 170 along the longitudinal direction 3 or along the traverse direction 4. According to a further alternative embodiment, the separation panel comprises a plurality of fixations 180 extending along the longitudinal direction 3, the traverse direction 4 or the depth direction 5 and adapted to fix the separation panel to the ground and/or to adjacent separation panels. According to an alternative embodiment, the ballast 170 is completely inserted in the semi-panel 101 before the two semi-panels 101 and 102 are welded together, thereby not extending outside of the separation panel. According to a further alternative embodiment, the ballast 170 is inserted in the openings 141 along the longitudinal direction. The ballast 170 is one or more of the following: metallic beams such as iron beams, metallic tubes such as iron tubes, a net of metallic beams, for example a net of iron beams, fibre glass and/or composite beams or tubes or bars, etc..

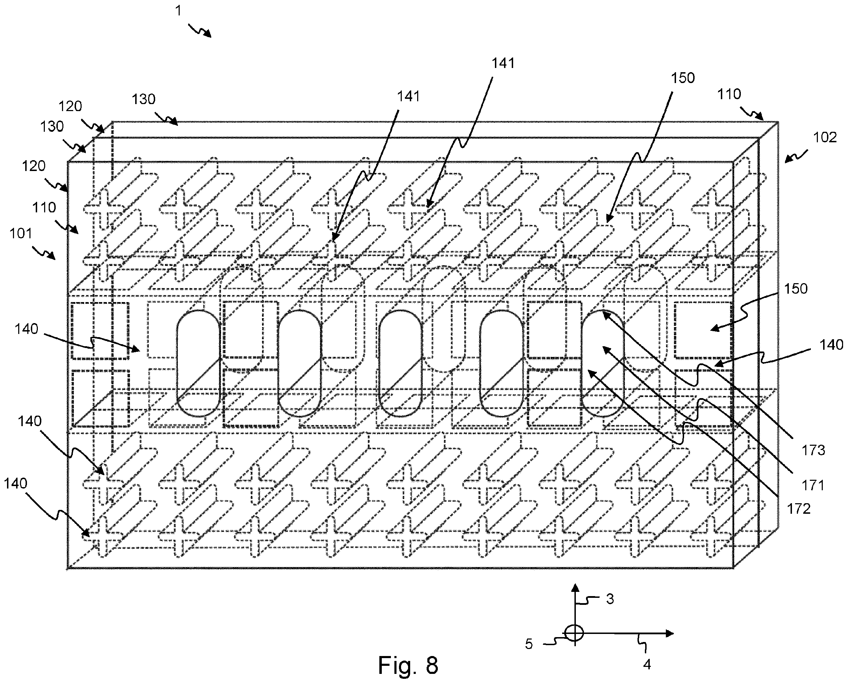

According to an embodiment shown in Fig. 8, a separation panel 1 comprises two semi-panels 101;102. A longitudinal direction 3 is defined in Fig. 8, a traverse direction 4 is defined in Fig. 8and a depth direction 5 is defined in Fig. 8. Components having identical reference numbers to components in Fig. 3 perform the same function. Each semi-panel 101;102 comprises a sidewall 110, a pair of parallel longitudinal walls 120 extending from the inner surface of the respective sidewall 110 and a pair of parallel traverse walls 130 extending from the inner surface of the respective sidewall 110. Each semi-panel 101;102 comprises longitudinal and traverse partition walls 140 extending from the inner surface of the respective sidewall 110 such that the partition walls 140 delimitate inside cavities 150 in each semi-panel 101;102. The sidewalls 110 of the semi-panels 101;102 further comprise a plurality of transversal openings 141 adapted to face each other when the two semi-panels 101;102 are arranged one against the other, wherein each transversal opening 171 is delimited by walls 172 having a convex cross-section 173, and where said walls 172 are bent towards one another and are connected to one another so that they give said walls 172 a convex cross-section 173. The transversal openings 171 are oblong. According to alternative embodiments, the transversal openings 171 are different from one another and/or are square, round, defined in a particular shape such as a triangle, a pentagon, a specific shape or logo, etc.. The transversal openings 171 are periodically spread in the separation panel 1 of Fig. 8. According to an alternative embodiment, the transversal openings 171 are not periodically defined in the separation panel 1. Additionally, one or more transversal openings 171 may be defined at one side of the separation panel 1 and/or at another side of the separation panel 1. The transversal openings 171 of Fig. 8 have the same dimensions. According to an alternative embodiment, the transversal openings 171 have different dimensions. The two semi-panels 101;102 are arranged one against the other along the longitudinal walls 120 and the traverse walls 130 such that the inner surfaces of the sidewalls 110 face each other, thereby forming a closed structure with a plurality of inside cavities 150 connected along the longitudinal direction 3 and along the traverse direction 4 through the openings 141. As shown on Fig. 8, in the surrounding of the transversal openings 171, the semi-panels 101;102 comprise longitudinal and traverse partition walls 140 which do not comprise respective openings 141, thereby forming inside cavities 150 which are not connected to each other when the two semi-panels are arranged one against the other.

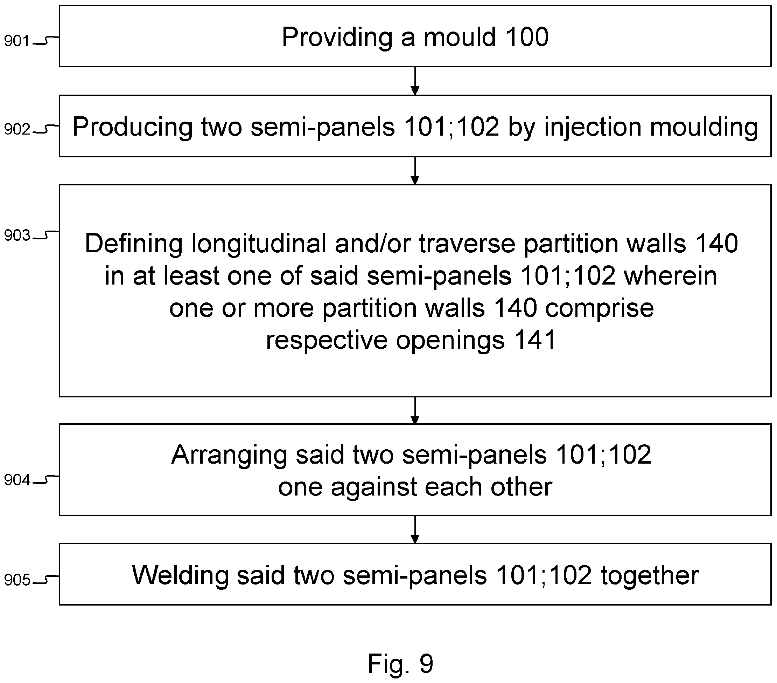

Fig. 9 is a flow chart of the steps of a method according to the present invention. In a first step 901, a mould 100 is provided. Two semi-panels 101;102 are produced in step 902 by injection moulding using the mould 100. A plurality of longitudinal and/or traverse partition walls 140 are defined in at least one of the semi-panels 101;102 in step 903, wherein one or more partitions walls 140 comprise respective openings 141 defined during the injection moulding. In step 904, the two semi-panels 101;102 are arranged one against the other, thereby forming a closed structure with a plurality of inside cavities connected along the longitudinal direction 3 and/or the traverse direction 4. Finally, in step 905, the two semi-panels 101;102 are welded together, thereby forming the separation panel 1.

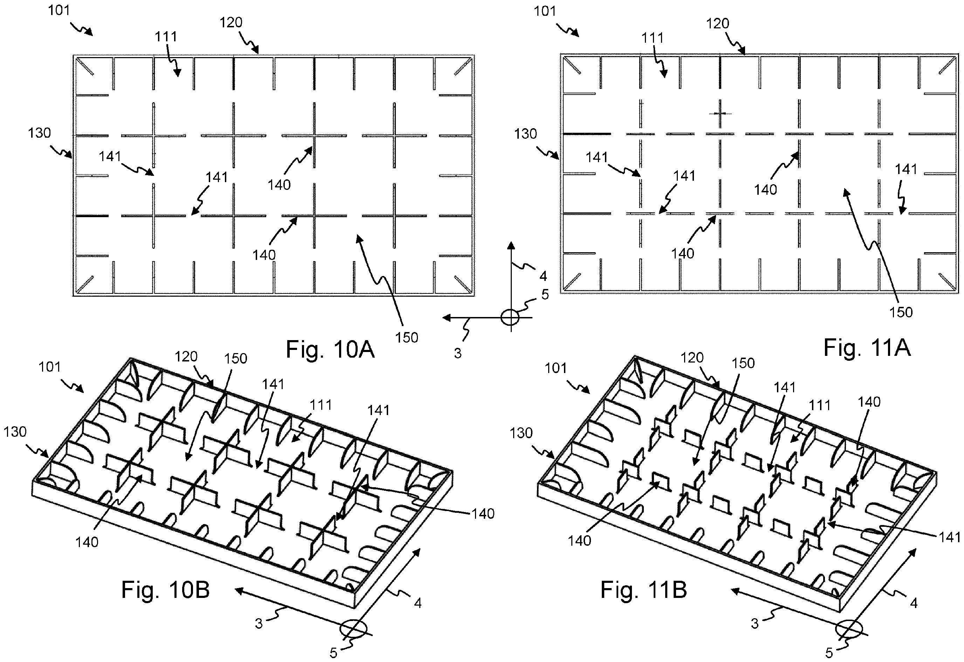

According to an embodiment shown in Fig. 10A, a longitudinal direction 3 is defined, a traverse direction 4 is defined and a depth direction 5 is defined. According to an embodiment shown in Fig. 10A, a top view of a semi-panel 101 of Fig. 10B is depicted. Components having identical reference numbers to components in Fig. 1 perform the same function. According to an embodiment shown in Fig. 10A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 10A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 10A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 10A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. For example, for a semi-panel of 500mm along the longitudinal direction and of 300mm along the traverse direction, the openings can be 30mm wide. The partition walls 140 are manufactured in the semi-panel 101 such that the partition walls intercept and cross each other to form crosses of partition walls 140. For example, for a semi-panel of 500mm along the longitudinal direction and of 300mm along the traverse direction, the openings can be 30mm wide and the crosses can measure 70mm along the longitudinal direction and 70mm along the traverse direction. In this example, 5 columns of inside cavities along the traverse direction and 3 rows of inside cavities along the longitudinal direction may be formed. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 10B is a perspective view of the semi-panel 101 of Fig. 10A.

According to an embodiment shown in Fig. 11A, a longitudinal direction 3 is defined, a traverse direction 4 is defined and a depth direction 5 is defined. According to an embodiment shown in Fig. 11A, a top view of a semi-panel 101 of Fig. 11B is depicted. Components having identical reference numbers to components in Fig. 10A perform the same function. According to an embodiment shown in Fig. 11A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 11A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 11A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 11A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. For example, for a semi-panel of 500mm along the longitudinal direction and of 300mm along the traverse direction, the openings can be 25mm wide. The partition walls 140 are manufactured in the semi-panel 101 such that the partition walls do not intercept or cross each other. For example, for a semi-panel of 500mm along the longitudinal direction and of 300mm along the traverse direction, the openings can be 25mm wide and the partition walls can also measure 25mm along the longitudinal direction and 25mm along the traverse direction. In this example, 5 columns of inside cavities along the traverse direction and 3 rows of inside cavities along the longitudinal direction may be formed. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 11B is a perspective view of the semi-panel 101 of Fig. 11A.

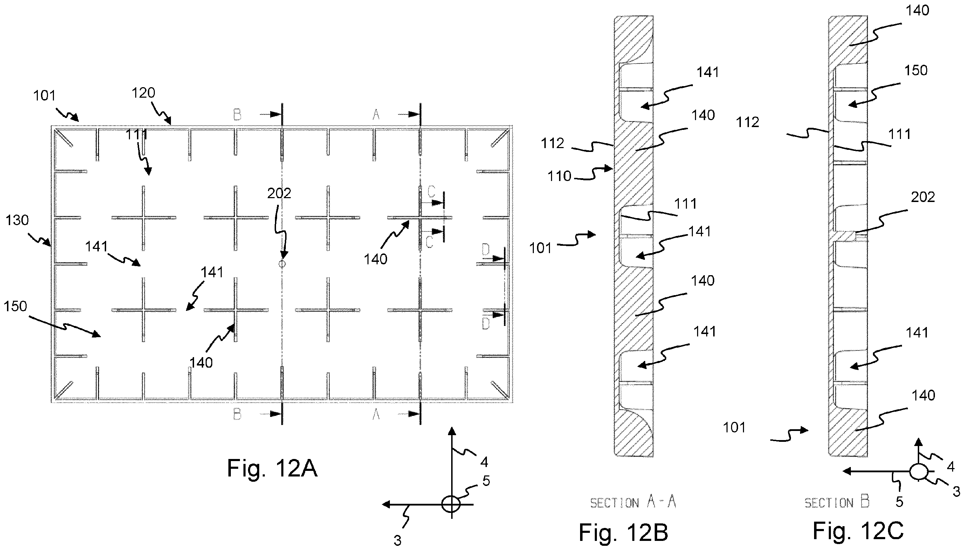

According to an embodiment shown in Fig. 12A, a longitudinal direction 3 is defined, a traverse direction 4 is defined and a depth direction 5 is defined. Components having identical reference numbers to components in Fig. 10A perform the same function. According to an embodiment shown in Fig. 12A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 12A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 12A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 12A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. For example, for a semi-panel of 500mm along the longitudinal direction and of 300mm along the traverse direction, the openings can be 30mm wide. The partition walls 140 are manufactured in the semi-panel 101 such that the partition walls intercept and cross each other to form crosses of partition walls 140. For example, for a semi-panel of 500mm along the longitudinal direction and of 300mm along the traverse direction, the openings can be 30mm wide and the crosses can measure 70mm along the longitudinal direction and 70mm along the traverse direction. In this example, 5 columns of inside cavities along the traverse direction and 3 rows of inside cavities along the longitudinal direction may be formed. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 12A further comprises a strength point 202 extending from the inner surface 111 of the sidewall 110 and positioned in the centre of an inside cavity 150 of the semi-panel 101. The openings 141 of the semi-panel 101 are semi-rectangular. Indeed, the partition walls 140 along the longitudinal direction 3 comprise extensions along the longitudinal direction 3 and the partition walls 140 along the traverse direction 4 comprise extensions along the traverse direction 4. The extensions along the longitudinal direction 3 and along the traverse direction 4 extend from the inner surface 111 of the sidewall 110, but do not extend along the full width of the semi-panel 101, i.e. do not extend as far as the longitudinal walls 120 or the traverse walls 130. This way, all the sharp corners of the partition walls 140 are broken during manufacturing. The partition walls 140 do not comprise an additional increase of material in their cross-section to allow ejectors with a bigger diameter than the cross-section to be used during injection moulding. The semi-panel 101 of Fig. 12A is therefore easy to manufacture. Fig. 12B is a side view of a cross-section of the semi-panel 101 of Fig. 12A along the A-A lines depicted on Fig. 12A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 12B, thereby partially delimitating an inside cavity 150. Fig. 12C is a side view of a cross-section of the semi-panel 101 of Fig. 12A along the B-B lines depicted on Fig. 12A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. The semi-panel 101 further comprises a strength point 202 which is circular and which is defined in the middle of the semi-panel 101.

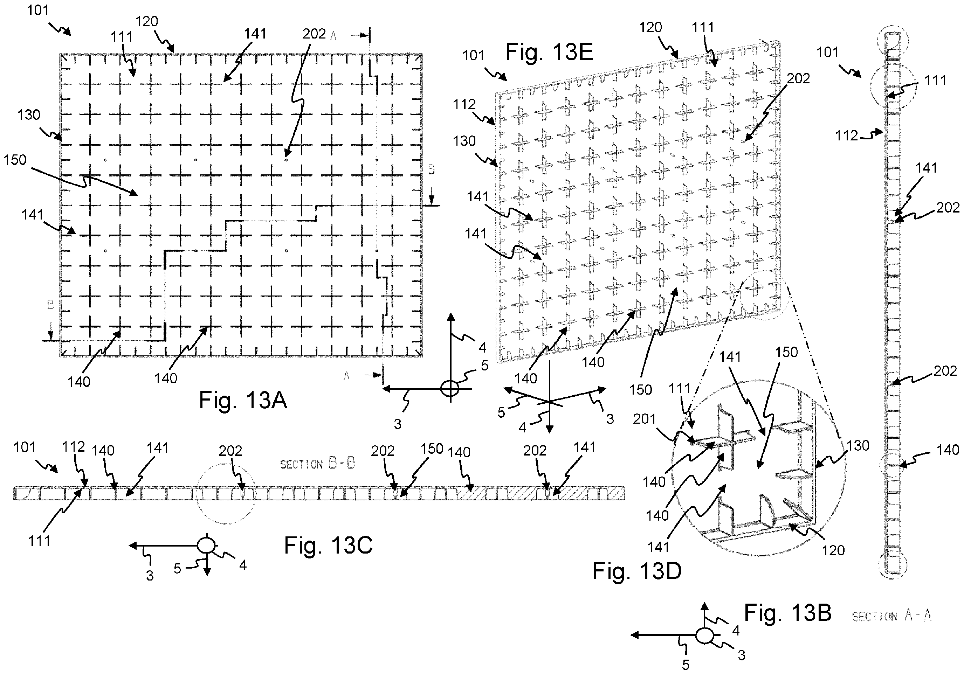

According to an embodiment shown in Fig. 13A, a longitudinal direction 3 is defined, a traverse direction 4 is defined and a depth direction 5 is defined. According to an embodiment shown in Fig. 13A, a top view of a semi-panel 101 of Fig. 13E is depicted. Components having identical reference numbers to components in Fig. 12A perform the same function. According to an embodiment shown in Fig. 13A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 13A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 13A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 13A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The semi-panel 101 of Fig. 13A for example extends on 1201mm along the longitudinal direction 3 and on 1001mm along the traverse direction 4. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 13A further comprises a plurality of strength points 202 extending from the inner surface 111 of the sidewall 110 and positioned in the centre of an inside cavity 150 of the semi-panel 101. The openings 141 of the semi-panel 101 are semi-rectangular. Indeed, the partition walls 140 along the longitudinal direction 3 comprise extensions 201 along the longitudinal direction 3 and the partition walls 140 along the traverse direction 4 comprise extensions 201 along the traverse direction 4. The extensions along the longitudinal direction 3 and along the traverse direction 4 extend from the inner surface 111 of the sidewall 110, but do not extend along the full width of the semi-panel 101 along the depth direction 5, i.e. do not extend as far from the inner surface 111 as the longitudinal walls 120 or the traverse walls 130 do. Detail H of Fig. 13D is zoomed in on the extensions 201 of the partition walls 140. This way, all the sharp corners of the partition walls 140 are broken during manufacturing. The partition walls 140 do not comprise an additional increase of material in their cross-section to allow ejectors with a bigger diameter than the cross-section to be used during injection moulding. The semi-panel 101 of Fig. 13A is therefore easy to manufacture. Fig. 13B is a side view of a cross-section of the semi-panel 101 of Fig. 13A along the A-A lines depicted on Fig. 13A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 13B, thereby partially delimitating an inside cavity 150. Fig. 13C is a side view of a cross-section of the semi-panel 101 of Fig. 13A along the B-B lines depicted on Fig. 13A along the longitudinal direction 3. The sidewall 110 of the semi-panel 101 is continuous along the longitudinal direction 3 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. The semi-panel 101 further comprises a plurality of strength points 202 which are circular and which are defined in the middle of inside cavities of the semi-panel 101. Fig. 13E is a perspective view of the semi-panel 101 of Fig. 13A.

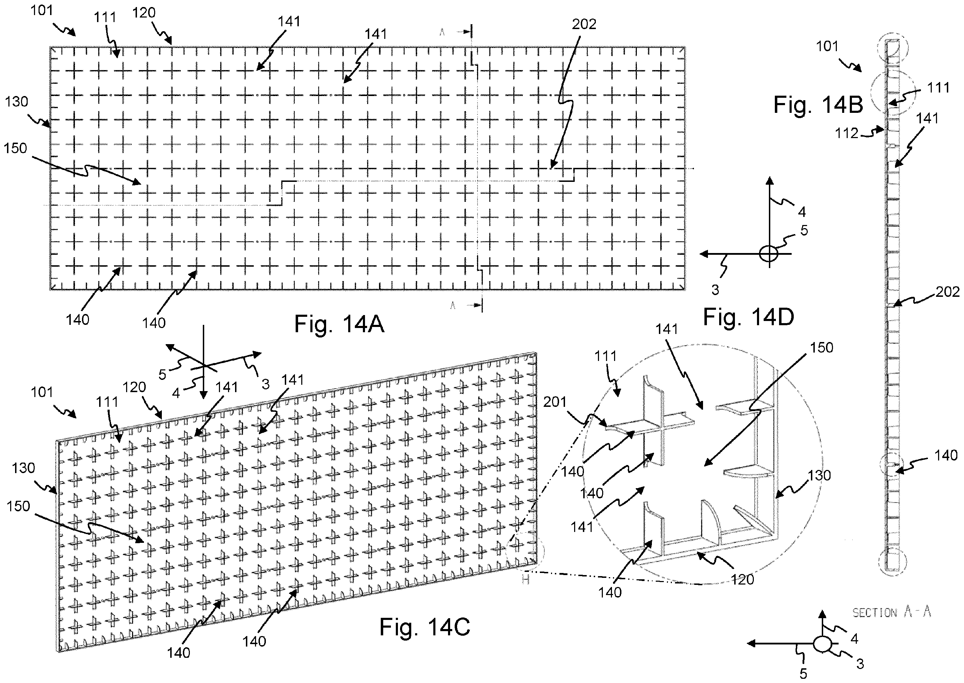

According to an embodiment shown in Fig. 14A, a longitudinal direction 3 is defined, a traverse direction 4 is defined and a depth direction 5 is defined. According to an embodiment shown in Fig. 14A, a top view of a semi-panel 101 of Fig. 14C is depicted. Components having identical reference numbers to components in Fig. 13A perform the same function. According to an embodiment shown in Fig. 14A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 14A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 14A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 14A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The semi-panel 101 of Fig. 14A for example extends on 2601 mm along the longitudinal direction 3 and on 1001mm along the traverse direction 4. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 14A further comprises a plurality of strength points 202 extending from the inner surface 111 of the sidewall 110 and positioned in the middle of an opening 141 defined along the longitudinal direction 3. According to an alternative embodiment, the plurality of strength points 202 can be defined along the traverse direction 4 and/or along the longitudinal direction 3. The openings 141 of the semi-panel 101 are semi-rectangular. Indeed, the partition walls 140 along the longitudinal direction 3 comprise extensions 201 along the longitudinal direction 3 and the partition walls 140 along the traverse direction 4 comprise extensions 201 along the traverse direction 4. The extensions 201 along the longitudinal direction 3 and along the traverse direction 4 extend from the inner surface 111 of the sidewall 110, but do not extend along the full width of the semi-panel 101 along the depth direction 5, i.e. do not extend as far from the inner surface 111 as the longitudinal walls 120 or the traverse walls 130 do. Detail H of Fig. 14D is zoomed in on the extensions 201 of the partition walls 140. This way, all the sharp corners of the partition walls 140 are broken during manufacturing. The partition walls 140 do not comprise an additional increase of material in their cross-section to allow ejectors with a bigger diameter than the cross-section to be used during injection moulding. The semi-panel 101 of Fig. 14A is therefore easy to manufacture. Fig. 14B is a side view of a cross-section of the semi-panel 101 of Fig. 14A along the A-A lines depicted on Fig. 14A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 14B, thereby partially delimitating an inside cavity 150. The semi-panel 101 further comprises a plurality of strength points 202 which are circular and which are defined in the middle of an opening 141 defined along the longitudinal direction 3. According to an alternative embodiment, the plurality of strength points 202 can be defined along the traverse direction 4 and/or along the longitudinal direction 3. Fig. 14C is a perspective view of the semi-panel 101 of Fig. 14A.

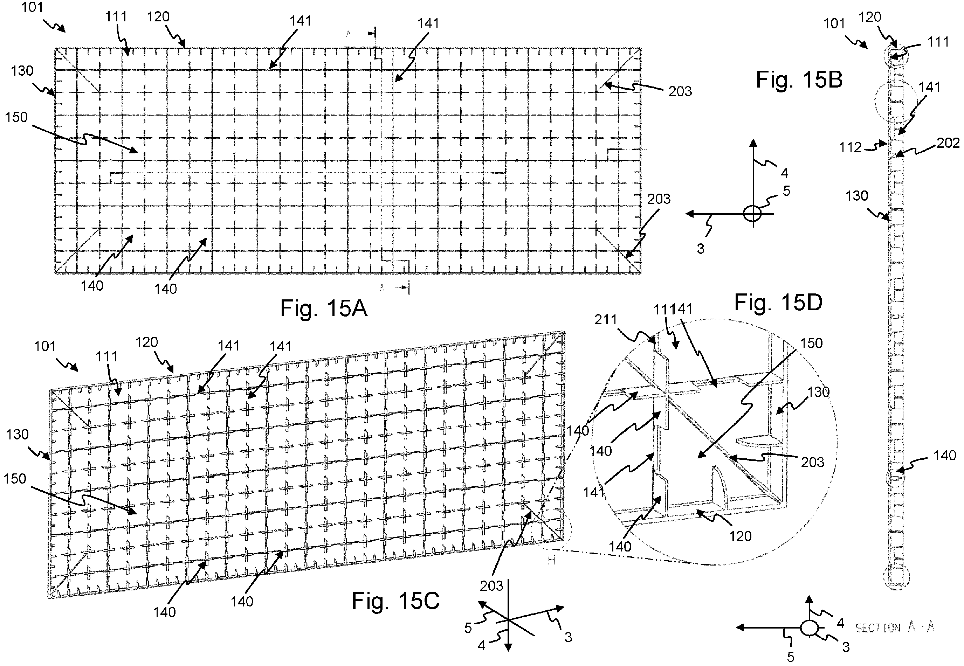

According to an embodiment shown in Fig. 15A, a longitudinal direction 3 is defined, a traverse direction 4 is defined and a depth direction 5 is defined. According to an embodiment shown in Fig. 15A, a top view of a semi-panel 101 of Fig. 15C is depicted. Components having identical reference numbers to components in Fig. 14A perform the same function. According to an embodiment shown in Fig. 15A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 15A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 15A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 15A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The semi-panel 101 of Fig. 15A for example extends on 2601 mm along the longitudinal direction 3 and on 1001mm along the traverse direction 4. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 15A further comprises a plurality of strength points 202 extending from the inner surface 111 of the sidewall 110 and positioned in the middle of an opening 141 defined along the longitudinal direction 3. The openings 141 of the semi-panel 101 are rectangular and do not extend fully along the entire length of the partition walls 140 along the depth direction 5. In other words, the openings 141 are partial recesses 211 formed in the partition walls 140 along the depth direction 5. Detail H of Fig. 15D is zoomed in on the partial recesses 211 of the partition walls 140. Fig. 15B is a side view of a cross-section of the semi-panel 101 of Fig. 15A along the A-A lines depicted on Fig. 15A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 15B, thereby partially delimitating an inside cavity 150. The semi-panel 101 further comprises a plurality of strength points 202 which are circular and which are defined in the middle of an opening 141 defined along the longitudinal direction 3. Fig. 15C is a perspective view of the semi-panel 101 of Fig. 15A. As depicted in the detail H of Fig. 15C, the semi-panel 101 of Fig. 15A further comprises mechanical support partition walls 203 defined under an angle of 45° with respect to the longitudinal direction 3 and the traverse direction 4 within an inside cavity and manufactured at the edges of the semi-panel 101. In other words, the mechanical support partition walls 203 extend from a corner of the semi-panel 101 diagonally towards the centre of the semi-panel 101, thereby extending along a diagonal direction of an inside cavity in two inside cavities formed by the partition walls 140. These mechanical support partition walls 203 further improve the mechanical strength of the semi-panel 101 by mechanically reinforcing its corners.

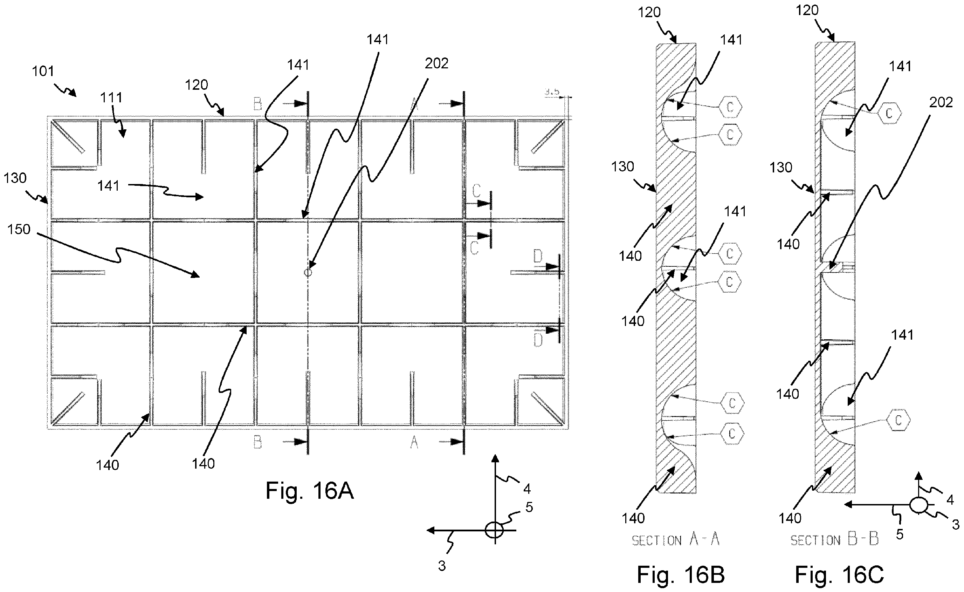

According to an embodiment shown in Fig. 16A, a longitudinal direction 3 is defined, a traverse direction 4 is defined and a depth direction 5 is defined. Components having identical reference numbers to components in Fig. 12A perform the same function. According to an embodiment shown in Fig. 16A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 16A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 16A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 16A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 16A further comprises a strength point 202 extending from the inner surface 111 of the sidewall 110 and positioned in the centre of the semi-panel 101. The openings 141 of the semi-panel 101 are semi-circular. Indeed, the partition walls 140 along the longitudinal direction 3 comprise circular openings 141 defined along the longitudinal direction 3 and along the traverse direction 4. This way, all the sharp corners of the partition walls 140 are broken during manufacturing. The partition walls 140 do not comprise an additional increase of material in their cross-section to allow ejectors with a bigger diameter than the cross-section to be used during injection moulding. The semi-panel 101 of Fig. 16A is therefore easy to manufacture. Fig. 16B is a side view of a cross-section of the semi-panel 101 of Fig. 16A along the A-A lines depicted on Fig. 16A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 16B, thereby partially delimitating an inside cavity 150. Fig. 16C is a side view of a cross-section of the semi-panel 101 of Fig. 16A along the B-B lines depicted on Fig. 16A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. The semi-panel 101 further comprises a strength point 202 which is circular and which is defined in the middle of the semi-panel 101. The openings 141 depicted on Fig. 16B and Fig. 16B are circular.

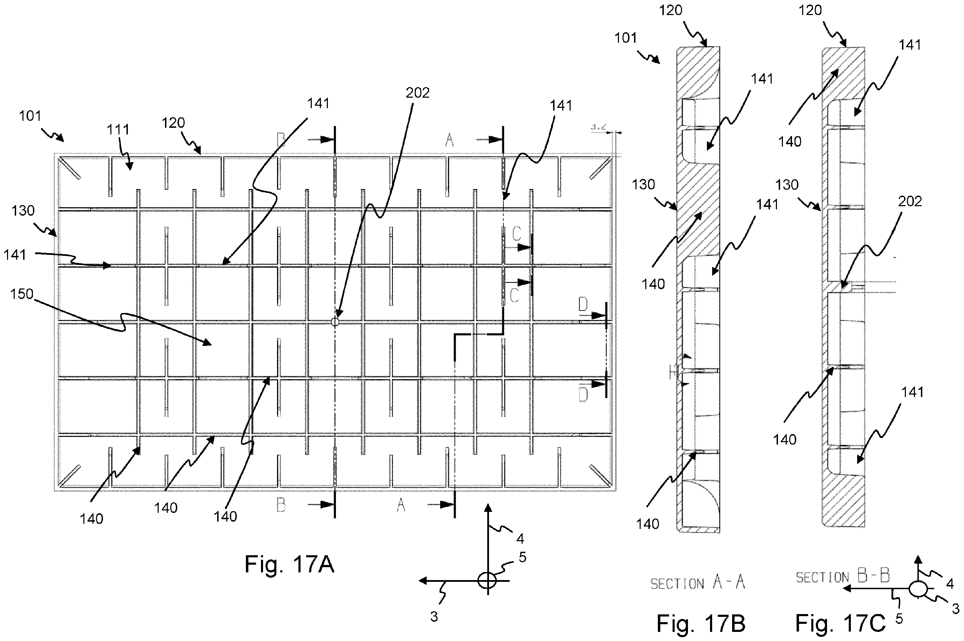

According to an embodiment shown in Fig. 17A, a longitudinal direction 3 is defined, a traverse direction 4 is defined and a depth direction 5 is defined. Components having identical reference numbers to components in Fig. 15A perform the same function. According to an embodiment shown in Fig. 17A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 17A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 17A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 17A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 17A further comprises a strength point 202 extending from the inner surface 111 of the sidewall 110 and positioned in the middle of the semi-panel 101. The openings 141 of the semi-panel 101 are semi-rectangular. Indeed, the partition walls 140 along the longitudinal direction 3 comprise extensions along the longitudinal direction 3 and the partition walls 140 along the traverse direction 4 comprise extensions along the traverse direction 4. The extensions along the longitudinal direction 3 and along the traverse direction 4 extend from the inner surface 111 of the sidewall 110, but do not extend along the full width of the semi-panel 101, i.e. do not extend as far as the longitudinal walls 120 or the traverse walls 130. This way, all the sharp corners of the partition walls 140 are broken during manufacturing. Fig. 17B is a side view of a cross-section of the semi-panel 101 of Fig. 17A along the A-A lines depicted on Fig. 17A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 17B, thereby partially delimitating an inside cavity 150. The semi-panel 101 further comprises a strength point 202 which are circular and which is defined in the middle of the semi-panel 101. As depicted in Fig. 17A, the semi-panel 101 of Fig. 17A further comprises additional mechanical support partition walls 140 along the traverse direction 4 and along the longitudinal direction 140. These mechanical support partition walls 140 further improve the mechanical strength of the semi-panel 101. These mechanical support partition walls 140 comprise openings 141 defined along the longitudinal direction 3. According to an alternative embodiment, the mechanical support partition walls 140 comprise openings 141 defined along the traverse direction 4. According to a further alternative embodiment, the mechanical support partition walls 140 comprise openings 141 defined along the longitudinal direction 3 and along the traverse direction 4. The mechanical support partition walls 140 do not extend as much as the partition walls 140 along a depth direction 5 of the semi-panel 101. For example, the height of the mechanical support partition walls 140 along the depth direction 5 is half of the height of the partition walls 140. According to an alternative embodiment, the mechanical support partition walls 140 extend as much as the partition walls 140 along a depth direction 5 of the semi-panel 101.

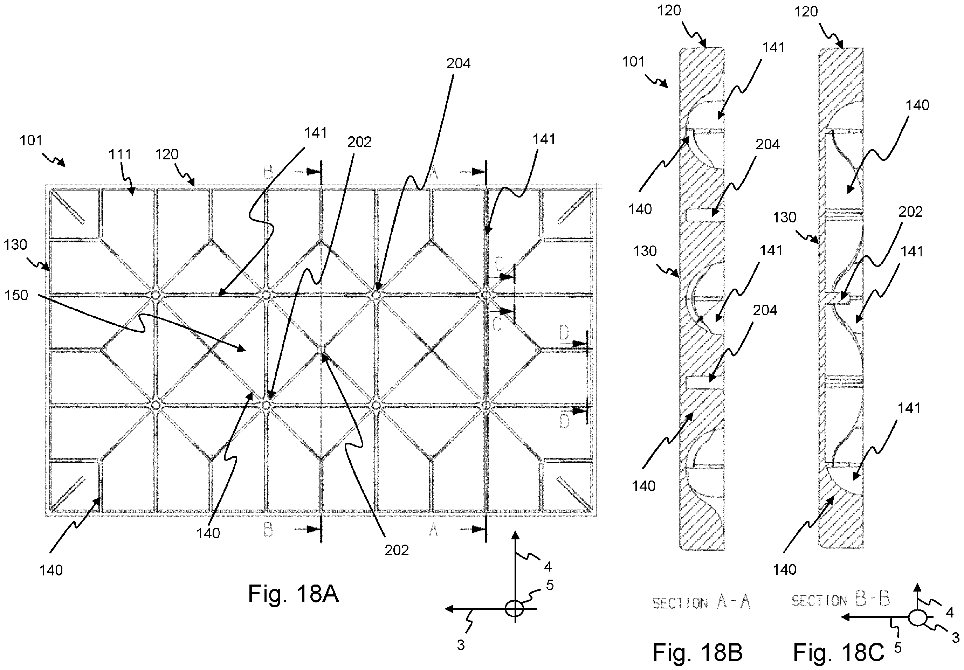

According to an embodiment shown in Fig. 18A, a longitudinal direction 3 is defined, a traverse direction 4 is defined and a depth direction 5 is defined. Components having identical reference numbers to components in Fig. 17A perform the same function. According to an embodiment shown in Fig. 18A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 18A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 18A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 18A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 18A further comprises a strength point 202 extending from the inner surface 111 of the sidewall 110 and positioned in the middle of the semi-panel 101. The openings 141 of the semi-panel 101 are circular. Indeed, the partition walls 140 along the longitudinal direction 3 comprise circular openings 141 defined along the longitudinal direction 3 and along the traverse direction 4. This way, all the sharp corners of the partition walls 140 are broken during manufacturing. Fig. 18B is a side view of a cross-section of the semi-panel 101 of Fig. 18A along the A-A lines depicted on Fig. 18A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 18B, thereby partially delimitating an inside cavity 150. The semi-panel 101 further comprises a strength point 202 which are circular and which is defined in the middle of the semi-panel 101. As depicted in Fig. 18A, the semi-panel 101 of Fig. 18A further comprises additional mechanical support partition walls 140 tilted with respect to the longitudinal direction 3 or the traverse direction 4. These mechanical support partition walls 140 are defined along a diagonal direction of an inside cavity and are inclined with 45° with respect to the longitudinal direction 3 or the traverse direction 4. These tilted mechanical support partition walls 140 further improve the mechanical strength of the semi-panel 101. These tilted mechanical support partition walls 140 comprise openings 141 which are semi-circular. As depicted in Fig. 18A and on the cross-section of Fig. 18B, the semi-panel 101 further comprises excavations 204 in the partition walls 140. These excavations 204 are defined along the depth direction 5 and are circular. They do not extend over the full width of the semi-panel along the depth direction 5. In other words, the excavations 204 are partial recesses in the partition walls 140.

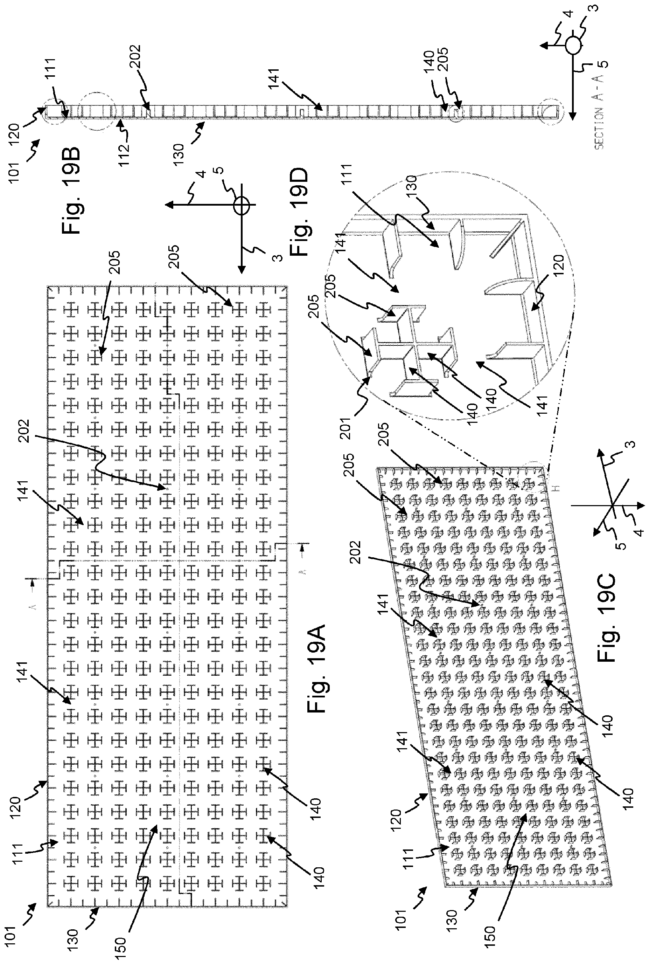

According to an embodiment shown in Fig. 19A, a longitudinal direction 3 is defined, a traverse direction 4 is defined and a depth direction 5 is defined. According to an embodiment shown in Fig. 19A, a top view of a semi-panel 101 of Fig. 19C is depicted. Components having identical reference numbers to components in Fig. 14A perform the same function. According to an embodiment shown in Fig. 19A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 19A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 19A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 19A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The semi-panel 101 of Fig. 19A for example extends on 2601 mm along the longitudinal direction 3 and on 1001mm along the traverse direction 4. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 19A further comprises a plurality of strength points 202 extending from the inner surface 111 of the sidewall 110 and positioned in the middle of an opening 141 defined along the longitudinal direction 3. According to an alternative embodiment, the plurality of strength points 202 can be defined along the traverse direction 4 and/or along the longitudinal direction 3. The partition walls 140 of the semi-panel 101 of Fig. 19A further comprise a plurality of traverse extensions 205. The traverse extensions 205 are formed at the openings 141 of the partition walls 140 such that the traverse extensions 205 are always traverse to the partition walls 140. For example, a traverse extension 205 is formed at the opening 141 of a partition wall 140 extending along the longitudinal direction 3 and this traverse extension 205 extends along the traverse direction 4. Similarly, a traverse extension 205 is formed at the opening 141 of a partition wall 140 extending along the traverse direction 4 and this traverse extension 205 extends along the longitudinal direction 3. Detail H of Fig. 19D is zoomed in on the traverse extensions 205 of the partition walls 140. The traverse extensions 205 comprise extensions 201 and the extensions 201 extend from the inner surface 111 of the sidewall 110, but do not extend along the full width of the semi-panel 101 along the depth direction 5, i.e. do not extend as far from the inner surface 111 as the longitudinal walls 120 or the traverse walls 130 do. This way, all the sharp corners of the partition walls 140 in contact with the inner surface 111 are broken during manufacturing. Fig. 19B is a side view of a cross-section of the semi-panel 101 of Fig. 19A along the A-A lines depicted on Fig. 19A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 19B, thereby partially delimitating an inside cavity 150. The semi-panel 101 further comprises a plurality of strength points 202 which are circular and which are defined in the middle of an opening 141 defined along the longitudinal direction 3. Fig. 19C is a perspective view of the semi-panel 101 of Fig. 19A.

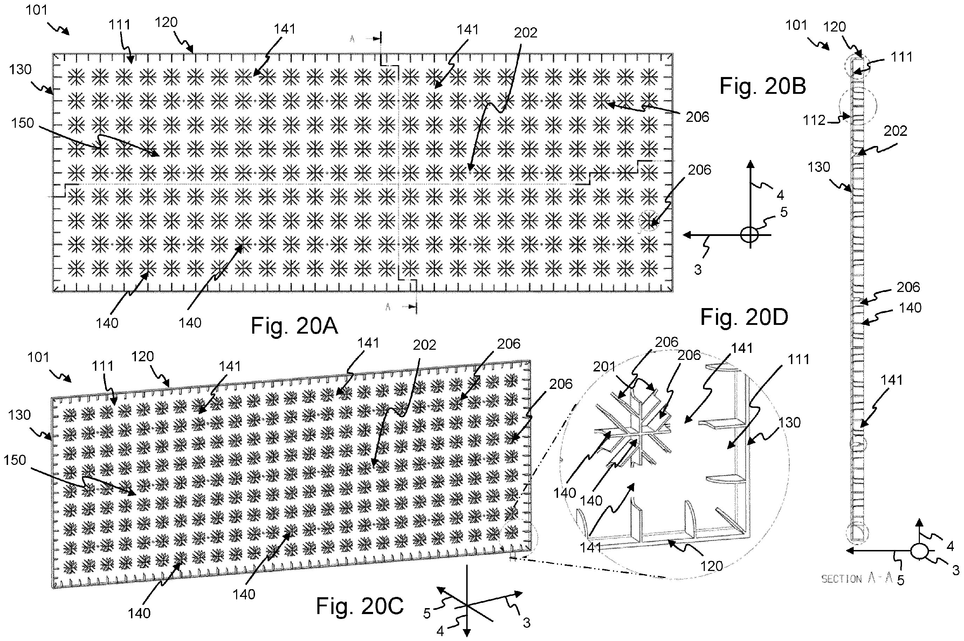

According to an embodiment shown in Fig. 20A, a longitudinal direction 3 is defined, a traverse direction 4 is defined and a depth direction 5 is defined. According to an embodiment shown in Fig. 20A, a top view of a semi-panel 101 of Fig. 20C is depicted. Components having identical reference numbers to components in Fig. 19A perform the same function. According to an embodiment shown in Fig. 20A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 20A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 20A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 20A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The semi-panel 101 of Fig. 20A for example extends on 2601mm along the longitudinal direction 3 and on 1001mm along the traverse direction 4. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 20A further comprises a plurality of strength points 202 extending from the inner surface 111 of the sidewall 110 and positioned in the middle of an opening 141 defined along the longitudinal direction 3. According to an alternative embodiment, the plurality of strength points 202 can be defined along the traverse direction 4 and/or along the longitudinal direction 3. The partition walls 140 of the semi-panel 101 of Fig. 20A further comprise a plurality of tilted extensions 206 tilted with respect to the longitudinal direction 3 or the traverse direction 4. Between two openings 141 along the longitudinal direction 3, a partition wall 140 comprises 4 tilted extensions 206 extending from the partition wall 140 along a diagonal direction. Similarly, between two openings 141 along the traverse direction 4, a partition wall 140 comprises 4 diagonal extensions 206 extending from the partition wall 140. For example, a partition wall 140 comprises 4 tilted extensions 206 extending from the partition wall 140 along a diagonal direction such that the tilted extensions 206 are tilted under +45° with respect to the traverse direction 4 and the partition wall 140 comprises 4 tilted extensions 206 extending from the partition wall 140 along a diagonal direction such that the tilted extensions 206 are tilted under -45° with respect to the traverse direction 4. Detail H of Fig. 20D is zoomed in on the tilted extensions 206 of the partition walls 140. The tilted extensions 206 comprise extensions 201 and the extensions 201 extend from the inner surface 111 of the sidewall 110, but do not extend along the full width of the semi-panel 101 along the depth direction 5, i.e. do not extend as far from the inner surface 111 as the longitudinal walls 120 or the traverse walls 130 do. This way, all the sharp corners of the partition walls 140 in contact with the inner surface 111 are broken during manufacturing. Fig. 20B is a side view of a cross-section of the semi-panel 101 of Fig. 20A along the A-A lines depicted on Fig. 20A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. A partition wall 140 extends from a traverse wall 130 on Fig. 20B, thereby partially delimitating an inside cavity 150. The semi-panel 101 further comprises a plurality of strength points 202 which are circular and which are defined in the middle of an opening 141 defined along the longitudinal direction 3. Fig. 20C is a perspective view of the semi-panel 101 of Fig. 20A.

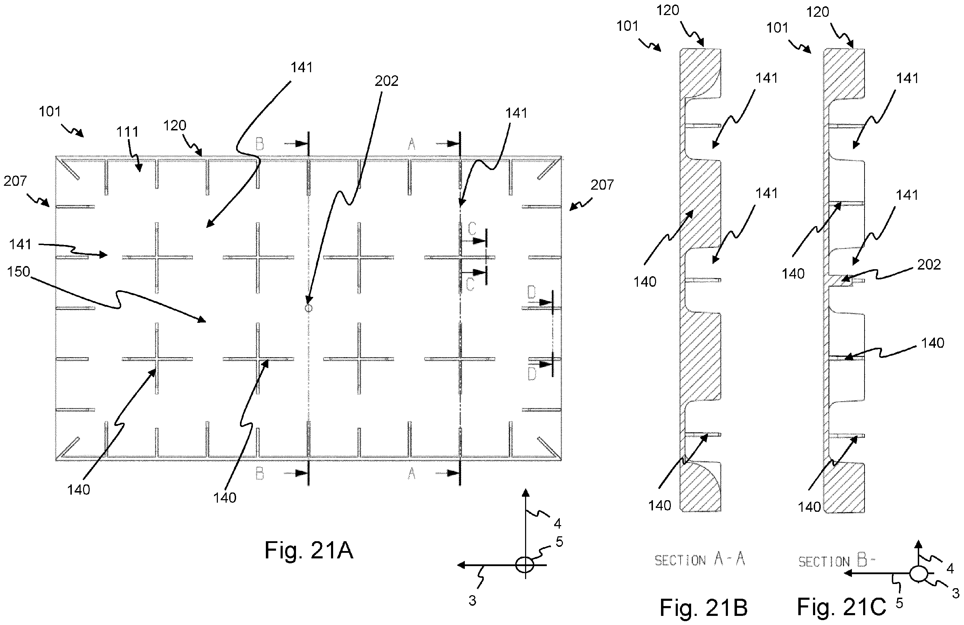

According to an embodiment shown in Fig. 21A, a longitudinal direction 3 is defined, a traverse direction 4 is defined and a depth direction 5 is defined. Components having identical reference numbers to components in Fig. 12A perform the same function. According to an embodiment shown in Fig. 21A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110. The semi-panel 101 does not comprise a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 21A, the longitudinal and the traverse partition walls 140 extend as much as the longitudinal walls 120 along the depth direction 5. According to an alternative embodiment, the longitudinal and the traverse partition walls 140 extend less than the longitudinal walls 120 along the depth direction 5. As shown in Fig. 21A, longitudinal and the traverse partition walls 140 also extend from the longitudinal walls 120 along the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 21A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 21A further comprises a strength point 202 extending from the inner surface 111 of the sidewall 110 and positioned in the centre of an inside cavity 150 of the semi-panel 101, in the centre of the semi-panel 101. The openings 141 of the semi-panel 101 are semi-rectangular. Indeed, the partition walls 140 along the longitudinal direction 3 comprise extensions along the longitudinal direction 3 and the partition walls 140 along the traverse direction 4 comprise extensions along the traverse direction 4. The extensions along the longitudinal direction 3 and along the traverse direction 4 extend from the inner surface 111 of the sidewall 110, but do not extend along the full width of the semi-panel 101, i.e. do not extend as far as the longitudinal walls 120 or the traverse walls 130. This way, all the sharp corners of the partition walls 140 are broken during manufacturing. The partition walls 140 do not comprise an additional increase of material in their cross-section to allow ejectors with a bigger diameter than the cross-section to be used during injection moulding. The semi-panel 101 of Fig. 21A is therefore easy to manufacture. Fig. 21B is a side view of a cross-section of the semi-panel 101 of Fig. 21A along the A-A lines depicted on Fig. 21A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. Fig. 21C is a side view of a cross-section of the semi-panel 101 of Fig. 21A along the B-B lines depicted on Fig. 21A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. The semi-panel 101 further comprises a strength point 202 which is circular and which is defined in the middle of the semi-panel 101.

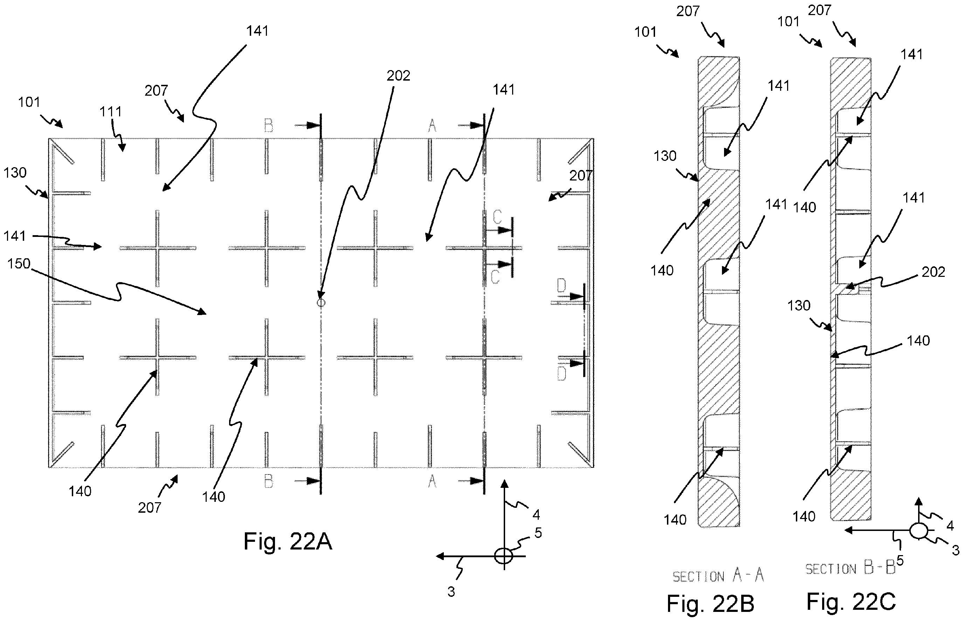

According to an embodiment shown in Fig. 22A, a longitudinal direction 3 is defined, a traverse direction 4 is defined and a depth direction 5 is defined. Components having identical reference numbers to components in Fig. 12A perform the same function. According to an embodiment shown in Fig. 22A, a semi-panel 101 is made of synthetic material 10 and comprises a sidewall 110 with an inner surface 111 and an outer surface. The semi-panel 101 further comprises a pair of parallel traverse walls 130 extending from the inner surface 111 of the sidewall 110. The semi-panel 101 does not comprise a pair of longitudinal walls 120 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 22A, the longitudinal and the traverse partition walls 140 extend as much as the traverse walls 130 along the depth direction 5. According to an alternative embodiment, the longitudinal and the traverse partition walls 140 extend less than the traverse walls 130 along the depth direction 5. As shown in Fig. 22A, longitudinal and the traverse partition walls 140 also extend from the I traverse walls 130 along the longitudinal direction 3. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 22A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. The width of the openings in the partition walls 140 along the traverse direction 4 is identical to the width of the openings in the partition walls 140 along the longitudinal direction 3. The partition walls 140 are manufactured in the semi-panel 101 such that the partition walls intercept and cross each other to form crosses of partition walls 140. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. The semi-panel 101 of Fig. 22A further comprises a strength point 202 extending from the inner surface 111 of the sidewall 110 and positioned in the centre of an inside cavity 150 of the semi-panel 101, in the centre of the semi-panel 101. The openings 141 of the semi-panel 101 are semi-rectangular. Indeed, the partition walls 140 along the longitudinal direction 3 comprise extensions along the longitudinal direction 3 and the partition walls 140 along the traverse direction 4 comprise extensions along the traverse direction 4. The extensions along the longitudinal direction 3 and along the traverse direction 4 extend from the inner surface 111 of the sidewall 110, but do not extend along the full width of the semi-panel 101, i.e. do not extend as far as the longitudinal walls 120 or the traverse walls 130. This way, all the sharp corners of the partition walls 140 are broken during manufacturing. The partition walls 140 do not comprise an additional increase of material in their cross-section to allow ejectors with a bigger diameter than the cross-section to be used during injection moulding. The semi-panel 101 of Fig. 22A is therefore easy to manufacture. Fig. 22B is a side view of a cross-section of the semi-panel 101 of Fig. 22A along the A-A lines depicted on Fig. 22A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. Fig. 22C is a side view of a cross-section of the semi-panel 101 of Fig. 22A along the B-B lines depicted on Fig. 22A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. The semi-panel 101 further comprises a strength point 202 which is circular and which is defined in the middle of the semi-panel 101.

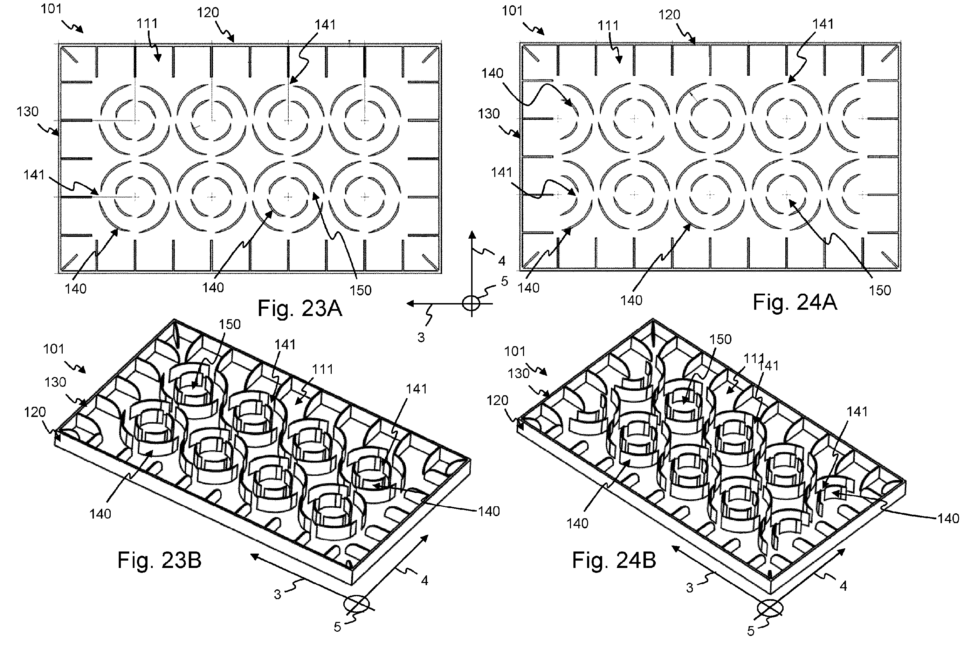

According to an embodiment shown in Fig. 23A, a longitudinal direction 3 is defined, a traverse direction 4 is defined and a depth direction 5 is defined. According to an embodiment shown in Fig. 23A, a top view of a semi-panel 101 of Fig. 23B is depicted. Components having identical reference numbers to components in Fig. 10A perform the same function. According to an embodiment shown in Fig. 23A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 23A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 23A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 23A are circular and are defined such that the centre of the semi-panel 101 is equidistant from the centre of 4 circles formed by the partition walls 140 the closest to the centre of the semi-panel 101. The semi-panel 101 comprises two concentric circles of partition walls 140. According to an alternative embodiment, the semi-panel 101 comprises one circle of partition walls 140. According to a further alternative embodiment, the semi-panel 101 comprises more than 2 concentric circles of partition walls 140. The circular partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 23A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 23B is a perspective view of the semi-panel 101 of Fig. 23A.

According to an embodiment shown in Fig. 24A, a longitudinal direction 3 is defined, a traverse direction 4 is defined and a depth direction 5 is defined. According to an embodiment shown in Fig. 24A, a top view of a semi-panel 101 of Fig. 24B is depicted. Components having identical reference numbers to components in Fig. 10A perform the same function. According to an embodiment shown in Fig. 24A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 24A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 24A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 24A are circular and are defined such that the centre of the semi-panel 101 is equidistant from the centre of 2 circles formed by the partition walls 140 the closest to the centre of the semi-panel 101. The semi-panel 101 comprises two concentric circles of partition walls 140. According to an alternative embodiment, the semi-panel 101 comprises one circle of partition walls 140. According to a further alternative embodiment, the semi-panel 101 comprises more than 2 concentric circles of partition walls 140. The circular partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 24A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 24B is a perspective view of the semi-panel 101 of Fig. 24A.

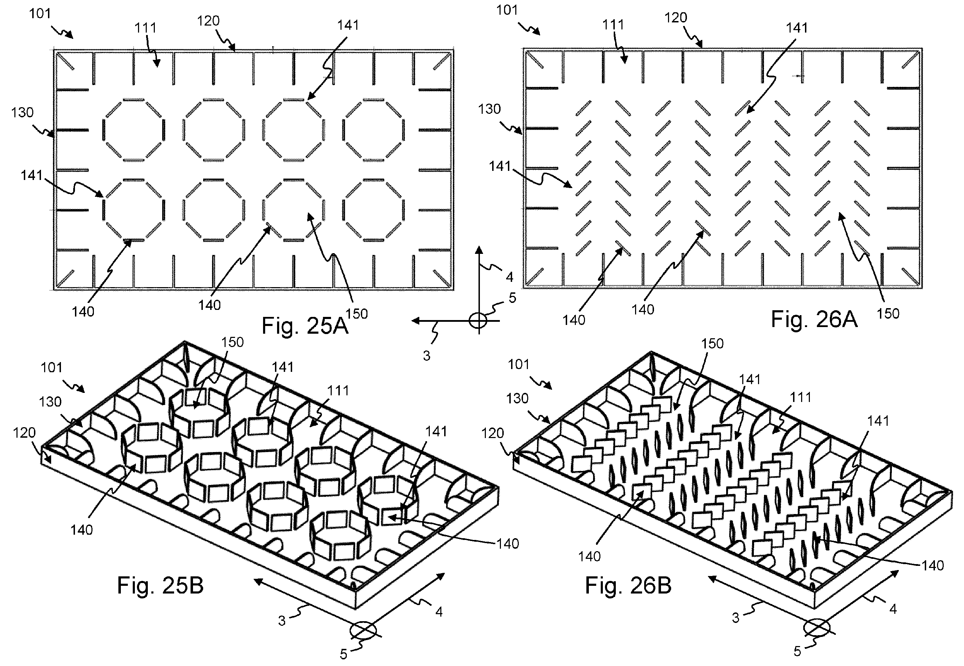

According to an embodiment shown in Fig. 25A, a longitudinal direction 3 is defined, a traverse direction 4 is defined and a depth direction 5 is defined. According to an embodiment shown in Fig. 25A, a top view of a semi-panel 101 of Fig. 25B is depicted. Components having identical reference numbers to components in Fig. 10A perform the same function. According to an embodiment shown in Fig. 25A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 25A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 25A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 25A are hexagonal and are defined such that the centre of the semi-panel 101 is equidistant from the centre of 4 hexagons formed by the partition walls 140 the closest to the centre of the semi-panel 101. The semi-panel 101 comprises a plurality of hexagons of partition walls 140. According to an alternative embodiment, the semi-panel 101 comprises a plurality of concentric hexagons of partition walls 140. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 25A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 25B is a perspective view of the semi-panel 101 of Fig. 25A.

According to an embodiment shown in Fig. 26A, a longitudinal direction 3 is defined, a traverse direction 4 is defined and a depth direction 5 is defined. According to an embodiment shown in Fig. 26A, a top view of a semi-panel 101 of Fig. 26B is depicted. Components having identical reference numbers to components in Fig. 10A perform the same function. According to an embodiment shown in Fig. 26A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 26A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 26A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 26A are tilted under an angle of +45° or under an angle of -45° with respect to the traverse direction and the partition walls 140 are defined such that two adjacent partition walls 140 along the longitudinal direction 3 extend along a different diagonal direction with respect to the longitudinal direction 3 or the traverse direction 4. In other words, two adjacent partition walls 140 along the longitudinal direction 3 are tilted under 90° with respect of each other. Two adjacent partition walls 140 along the traverse direction 4 are tilted under the same angle with respect to the traverse direction 4. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 26A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 26B is a perspective view of the semi-panel 101 of Fig. 26A.

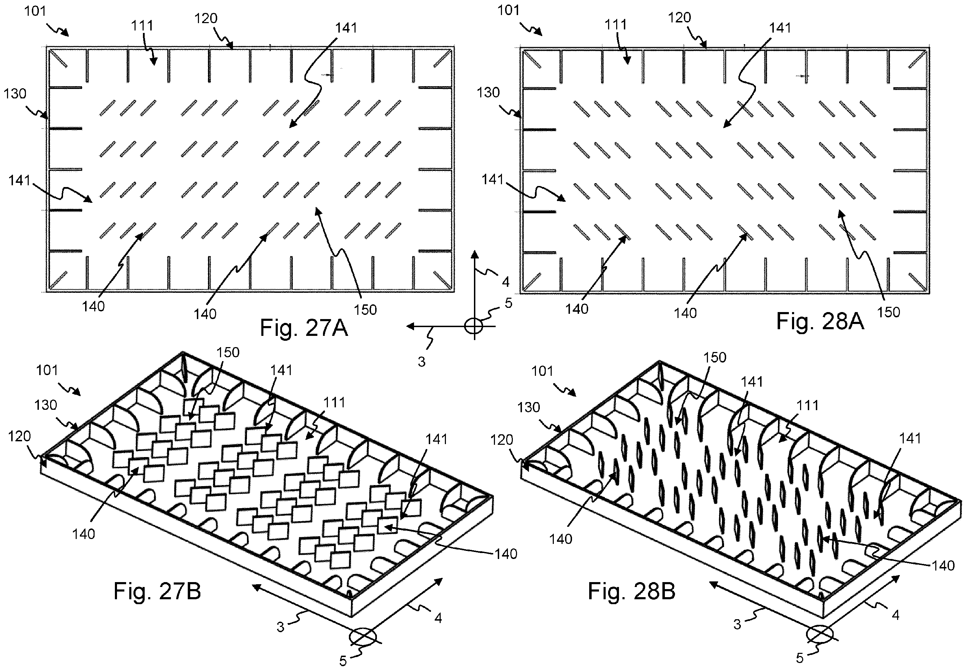

According to an embodiment shown in Fig. 27A, a longitudinal direction 3 is defined, a traverse direction 4 is defined and a depth direction 5 is defined. According to an embodiment shown in Fig. 27A, a top view of a semi-panel 101 of Fig. 27B is depicted. Components having identical reference numbers to components in Fig. 10A perform the same function. According to an embodiment shown in Fig. 27A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 27A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 27A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 27A are tilted with respect the traverse direction 4 or the longitudinal direction 3 and the partition walls 140 are defined such that all the partition walls 140 extend under the same angle with respect to the longitudinal direction 3 or the traverse direction 4. For example, all the partition walls 140 extend under an angle of -45° with respect to the traverse direction 4. According to an alternative embodiment, all the partition walls 140 extend under an angle of +45° with respect to the traverse direction 4. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 27A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 27B is a perspective view of the semi-panel 101 of Fig. 27A.

According to an embodiment shown in Fig. 28A, a longitudinal direction 3 is defined, a traverse direction 4 is defined and a depth direction 5 is defined. According to an embodiment shown in Fig. 28A, a top view of a semi-panel 101 of Fig. 28B is depicted. Components having identical reference numbers to components in Fig. 10A perform the same function. According to an embodiment shown in Fig. 28A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 28A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 28A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 28A are tilted with respect the traverse direction 4 or the longitudinal direction 3 and the partition walls 140 are defined such that all the partition walls 140 extend under the same angle with respect to the longitudinal direction 3 or the traverse direction 4. For example, all the partition walls 140 extend under an angle of -45° with respect to the traverse direction 4. According to an alternative embodiment, all the partition walls 140 extend under an angle of +45° with respect to the traverse direction 4. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 28A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 28B is a perspective view of the semi-panel 101 of Fig. 28A.

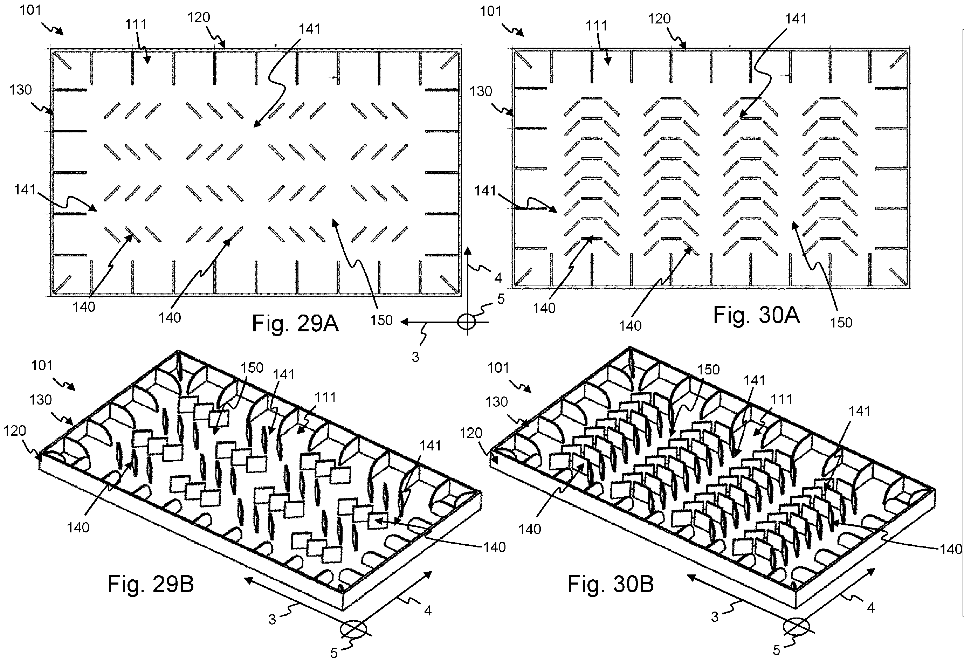

According to an embodiment shown in Fig. 29A, a longitudinal direction 3 is defined, a traverse direction 4 is defined and a depth direction 5 is defined. According to an embodiment shown in Fig. 29A, a top view of a semi-panel 101 of Fig. 29B is depicted. Components having identical reference numbers to components in Fig. 10A perform the same function. According to an embodiment shown in Fig. 29A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 29A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 29A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 29A are tilted with respect the traverse direction 4 or the longitudinal direction 3 and the partition walls 140 are defined such that adjacent groups of partition walls 140 along the longitudinal direction 3 and along the traverse direction 4 extend under the same angle with respect to the longitudinal direction 3 or the traverse direction 4. For example, more than one partition walls 140 extend under an angle of -45° with respect to the traverse direction 4 and more than one partition walls 140 extend under an angle of +45° with respect to the traverse direction 4. In other words, the partition walls 140 of the semi-panel 101 of Fig. 29A are defined such that the centre of the semi-panel 101 is the centre of a square formed by the partition walls 140 wherein the partition walls 140 comprise openings 141. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 29A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 29B is a perspective view of the semi-panel 101 of Fig. 29A.

According to an embodiment shown in Fig. 30A, a longitudinal direction 3 is defined, a traverse direction 4 is defined and a depth direction 5 is defined. According to an embodiment shown in Fig. 30A, a top view of a semi-panel 101 of Fig. 30B is depicted. Components having identical reference numbers to components in Fig. 10A perform the same function. According to an embodiment shown in Fig. 30A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 30A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 30A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 25A are semi-circular and are aligned along the traverse direction 4. According to an alternative embodiment, the partition walls 140 of the semi-panel 101 are aligned along the longitudinal direction 3. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 30A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 30B is a perspective view of the semi-panel 101 of Fig. 30A.

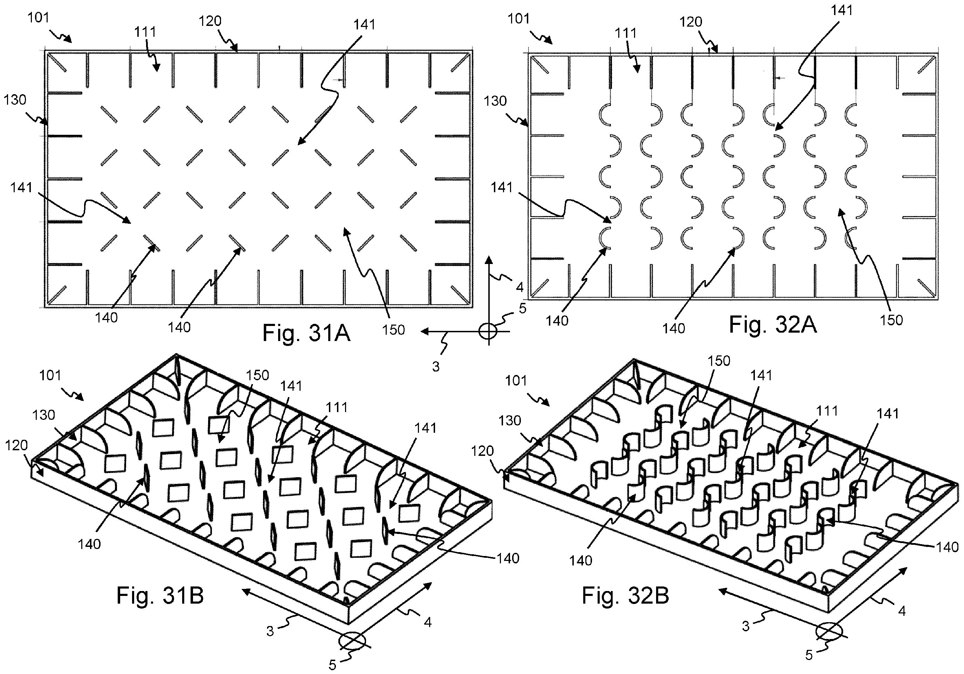

According to an embodiment shown in Fig. 31A, a longitudinal direction 3 is defined, a traverse direction 4 is defined and a depth direction 5 is defined. According to an embodiment shown in Fig. 31A, a top view of a semi-panel 101 of Fig. 31B is depicted. Components having identical reference numbers to components in Fig. 10A perform the same function. According to an embodiment shown in Fig. 31A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 31A, the partition walls 140 extend as much as the longitudinal walls 120 along the depth direction 5 and as much as traverse walls 130 along the depth direction 5. According to an alternative embodiment, the partition walls 140 extend less than the longitudinal walls 120 along the depth direction 5 and/or less than the traverse walls 130 along the depth direction 5. As shown in Fig. 31A, the partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 of the semi-panel 101 of Fig. 31A are tilted under an angle of +45° or under an angle of -45° with respect to the traverse direction and the partition walls 140 are defined such that two adjacent partition walls 140 along the longitudinal direction 3 and along the traverse direction 4 extend along a different diagonal direction with respect to the longitudinal direction 3 or the traverse direction 4. In other words, two adjacent partition walls 140 along the longitudinal direction 3 are tilted under 90° with respect of each other. Two adjacent partition walls 140 along the traverse direction 4 and along the longitudinal direction 3 are tilted under the same angle with respect to the traverse direction 4. In other words, the partition walls 140 of the semi-panel 101 of Fig. 31A are defined such that the centre of the semi-panel 101 is the centre of a cross formed by four tilted partition walls 140 wherein each tilted partition walls 140 comprises openings 141. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 31A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 31B is a perspective view of the semi-panel 101 of Fig. 31A.

According to an embodiment shown in Fig. 32A, a longitudinal direction 3 is defined, a traverse direction 4 is defined and a depth direction 5 is defined. According to an embodiment shown in Fig. 32A, a top view of a semi-panel 101 of Fig. 32B is depicted. Components having identical reference numbers to components in Fig. 10A perform the same function. According to an embodiment shown in Fig. 32A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 132 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 32A, the partition walls 140 extend as much as the longitudinal walls 120 along the depth direction 5 and as much as traverse walls 132 along the depth direction 5. According to an alternative embodiment, the partition walls 140 extend less than the longitudinal walls 120 along the depth direction 5 and/or less than the traverse walls 132 along the depth direction 5. As shown in Fig. 32A, the partition walls 140 also extend from the longitudinal walls 120 and from the traverse walls 132 along the longitudinal direction 3 and the traverse direction 4. The partition walls 140 of the semi-panel 101 delimitate inside cavities 150 in the semi-panel 101. The partition walls 140 of the semi-panel 101 of Fig. 25A are semi-circular and are aligned along the traverse direction 4 such that adjacent semi-circles are rotated by 180° with respect to each other along the traverse direction 4. According to an alternative embodiment, the adjacent semi-circles are rotated by 180° with respect to each other along the longitudinal direction 3. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 32A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 32B is a perspective view of the semi-panel 101 of Fig. 32A.

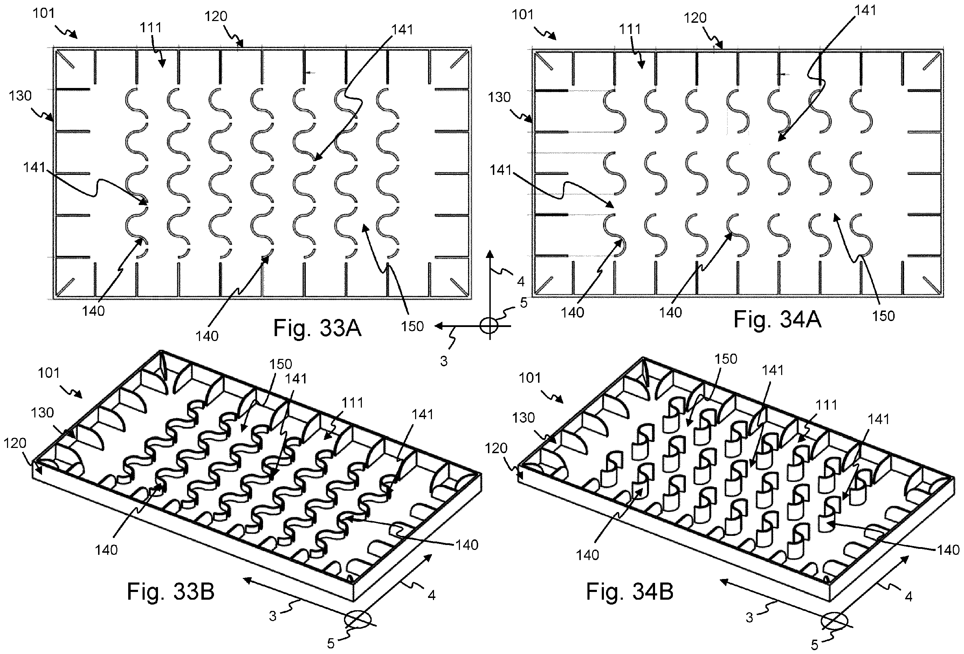

According to an embodiment shown in Fig. 33A, a longitudinal direction 3 is defined, a traverse direction 4 is defined and a depth direction 5 is defined. According to an embodiment shown in Fig. 33A, a top view of a semi-panel 101 of Fig. 33B is depicted. Components having identical reference numbers to components in Fig. 10A perform the same function. According to an embodiment shown in Fig. 33A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 133 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 33A, the partition walls 140 extend as much as the longitudinal walls 120 along the depth direction 5 and as much as traverse walls 133 along the depth direction 5. According to an alternative embodiment, the partition walls 140 extend less than the longitudinal walls 120 along the depth direction 5 and/or less than the traverse walls 133 along the depth direction 5. As shown in Fig. 33A, the partition walls 140 also extend from the longitudinal walls 120 and from the traverse walls 133 along the longitudinal direction 3 and the traverse direction 4. The partition walls 140 of the semi-panel 101 delimitate inside cavities 150 in the semi-panel 101. The partition walls 140 of the semi-panel 101 of Fig. 25A are defined as periodic waves along the traverse direction 4. According to an alternative embodiment, the partition walls 140 of the semi-panel 101 of Fig. 25A are defined as periodic waves along the longitudinal direction 3. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 33A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 33B is a perspective view of the semi-panel 101 of Fig. 33A.

According to an embodiment shown in Fig. 34A, a longitudinal direction 3 is defined, a traverse direction 4 is defined and a depth direction 5 is defined. According to an embodiment shown in Fig. 34A, a top view of a semi-panel 101 of Fig. 34B is depicted. Components having identical reference numbers to components in Fig. 10A perform the same function. According to an embodiment shown in Fig. 34A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 134 extending from the inner surface 111 of the sidewall 110 along the depth direction 5. The semi-panel 101 comprises a plurality of partition walls 140 extending from the inner surface 111 of the sidewall 110 along the depth direction 5. According to the embodiment depicted in Fig. 34A, the partition walls 140 extend as much as the longitudinal walls 120 along the depth direction 5 and as much as traverse walls 134 along the depth direction 5. According to an alternative embodiment, the partition walls 140 extend less than the longitudinal walls 120 along the depth direction 5 and/or less than the traverse walls 134 along the depth direction 5. As shown in Fig. 34A, the partition walls 140 also extend from the longitudinal walls 120 and from the traverse walls 134 along the longitudinal direction 3 and the traverse direction 4. The partition walls 140 of the semi-panel 101 delimitate inside cavities 150 in the semi-panel 101. The partition walls 140 of the semi-panel 101 of Fig. 25A are defined as periodic waves along the traverse direction 4. According to an alternative embodiment, the partition walls 140 of the semi-panel 101 of Fig. 25A are defined as periodic waves along the longitudinal direction 3. The partition walls 140 further comprise respective openings 141 extending through the partition walls 140 such that a plurality of inside cavities 150 are connected along the longitudinal direction 3 through the openings 141. The openings 141 of Fig. 34A are wider along the traverse direction 4 than the openings 141 of Fig. 33A. The semi-panel 101 is produced by injection moulding. According to the embodiment shown in Fig. 34A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially covers the inner surface 111 of the sidewall 110 of the semi-panel 101. This further improves the mechanical strength of the semi-panel 101. In other words, the mesh of inside cavities 150 connected inside a separation panel improves the bend, tensile, shear and compression strengths of the corresponding semi-panel 101. The semi-panel 101 is therefore more mechanically resistant and can withstand larger pressures and tensions without bending and/or tearing. Fig. 34B is a perspective view of the semi-panel 101 of Fig. 34A.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method of manufacturing a separation panel (1) made of a synthetic material (10), said method comprising the steps of:
- providing one mould (100);
- producing two semi-panels (101;102) by injection moulding using said mould (100), wherein each of said two semi-panels (101;102) comprises:
∘ a sidewall (110) comprising an inner surface (111) and an outer surface (112);
∘ a pair of parallel longitudinal walls (120) extending from said inner surface (111) and a pair of parallel traverse walls (130) extending from said inner surface (111);
and wherein both semi-panels (101;102) further comprise a symmetric plurality of partition walls (140) extending from said inner surface (111), wherein:
∘ said partition walls (140) delimitate inside cavities (150) in each of said semi-panels (101;102); and
∘ one or more of said partition walls (140) comprise respective openings (141) extending through said partition walls (140);
- arranging said two semi-panels (101;102) one against the other along said longitudinal walls (120) and said traverse walls (130) such that said inner surfaces (111) of said sidewalls (110) face each other and such that said partition walls (140) of one of said semi-panels (101) are in direct contact with said partition walls (140) of the other semi-panel (102) when said two semi-panels (101;102) are arranged one against the other, thereby forming a structure with a plurality of inside cavities (150) connected through said openings (141); and
- welding said two semi-panels (101;102) together along said longitudinal walls (120) and said traverse walls (130), thereby forming said separation panel (1) as a closed structure.

2. A method according to claim 1, wherein said partition walls (140) are longitudinal and/or traverse partition walls (140) extending from said inner surface (111).

3. A method according to any of the preceding claims, wherein said inside cavities (150) are connected along the longitudinal direction (3) and/or along the traverse direction (4) through said openings (141).

4. A method according to any of the preceding claims, wherein, when each of said two semi-panels (101;102) comprises a pair of parallel longitudinal walls (120) extending from said inner surface (111) and a pair of parallel traverse walls (130) extending from said inner surface (111), said structure is a closed structure with a plurality of inside cavities (150) connected through said openings (141).

5. A method according to any of the preceding claims, wherein said method further comprises the step of filling said separation panel (1) at least partially with a fire resistant material (20) or a fire retardant material (21).

6. A method according to claim 5, wherein said step of filling said separation panel further comprises:
- puncturing with an injection needle said sidewall of one of said semi-panels (101;102) from said outer surface (112) to said inner surface (111) at a position of an inside cavity (150); and
- injecting said fire resistant material (20) or said fire retardant material (21) in said inside cavity (150).

7. A method according to one of the preceding claims, wherein said method further comprises inserting a ballast (170) in said openings (141) before said two semi-panels (101;102) are welded together.

8. A separation panel (1) made of a synthetic material (10), said separation panel (1) comprising two semi-panels (101;102) wherein the two semi-panels (101;102) are produced by injection moulding using a mould (100) and are therefore identical, and wherein each of said two semi-panels (101;102) comprises:
- a sidewall (110) comprising an inner surface (111) and an outer surface (112);
- a pair of parallel longitudinal walls (120) extending from said inner surface (111) and a pair of parallel traverse walls (130) extending from said inner surface (111);
wherein both semi-panels (101;102) further comprise a symmetric plurality of partition walls (140) extending from said inner surface (111), wherein:
- said partition walls (140) are adapted to delimitate inside cavities (150) in each of said semi-panels (101;102); and
- one or more of said partition walls (140) comprise respective openings (141) extending through said partition walls (140);
and wherein said two semi-panels (101;102) are:
- arranged one against the other along said longitudinal walls (120) and said traverse walls (130) such that said inner surfaces (111) of said sidewalls (110) face each other and such that said partition walls (140) of one of said semi-panels (101) are in direct contact with said partition walls (140) of the other semi-panel (102) when said two semi-panels (101;102) are arranged one against the other, thereby forming a structure with a plurality of inside cavities (150) connected through said openings (141); and
- welded together along said longitudinal walls (120) and said traverse walls (130), thereby forming said separation panel (1) as a closed structure.

9. A separation panel (1) according to claim 8, wherein said partition walls (140) are longitudinal and/or traverse partition walls (140) extending from said inner surface (111).

10. A separation panel (1) according to claim 8 or 9, wherein said inside cavities (150) are connected along the longitudinal direction (3) and/or along the traverse direction (4) through said openings (141).

11. A separation panel (1) according to any of the claims 8 to 10, wherein said plurality of inside cavities (150) covers said inner surface (111) of said sidewall (110) completely.

12. A separation panel (1) according to any of the claims 8 to 11, wherein said sidewalls (110) of said two semi-panels (101;102) comprise a plurality of transversal openings (171) adapted to face each other when said two semi-panels (101;102) are arranged one against the other, wherein each transversal opening (171) is delimited by walls (172) having a convex cross-section (173), and wherein said walls (172) are bent towards one another and are connected to one another so that they give said walls (172) a convex cross section (173).

13. A separation panel (1) according to claim 12, wherein at least one semi-panel (101) of said two semi-panels (101;102) further comprises a plurality of longitudinal and/or traverse partition walls (140) extending from said inner surface (111), wherein:
- said partition walls (140) are adapted to delimitate inside cavities (150) in said semi-panel (101); and
- one or more of said partition walls (140) of said inside cavities (150) delimited above and under said transversal openings (171) in said separation panel (1) comprise respective openings (141) extending through said partition walls (140).

## Patentansprüche

1. Verfahren zum Herstellen einer Trennplatte (1) aus einem Kunststoff (10),
wobei das Verfahren die Schritte umfasst:
- Bereitstellen einer Form (100);
- Produzieren von zwei Halbplatten (101; 102) durch Spritzgießen unter Verwendung der Form (100), wobei jede der zwei Halbplatten (101; 102) umfasst:
∘ eine Seitenwand (110), die eine Innenfläche (111) und eine Außenfläche (112) umfasst;
∘ ein Paar paralleler Längswände (120), die sich von der Innenfläche (111) erstrecken, und ein Paar paralleler Querwände (130), die sich von der Innenfläche (111) erstrecken;
und wobei beide Halbplatten (101; 102) ferner eine symmetrische Vielzahl von Trennwänden (140) umfassen, die sich von der Innenfläche (111) erstrecken, wobei:
o die Trennwände (140) innere Hohlräume (150) in jeder der Halbplatten (101; 102) begrenzen; und
o eine oder mehrere der Trennwände (140) entsprechende Öffnungen (141) umfassen, die sich durch die Trennwände (140) erstrecken;
- Anordnen der zwei Halbplatten (101; 102) gegeneinander entlang der Längswände (120) und der Querwände (130), sodass die Innenflächen (111) der Seitenwände (110) einander zugewandt sind und sodass die Trennwände (140) einer der Halbplatten (101) in direktem Kontakt mit den Trennwänden (140) der anderen Halbplatte (102) stehen, wenn die zwei Halbplatten (101; 102) gegeneinander angeordnet sind, wodurch eine Struktur mit einer Vielzahl von inneren Hohlräumen (150) gebildet wird, die durch die Öffnungen (141) verbunden sind; und
- Zusammenschweißen der zwei Halbplatten (101; 102) entlang der Längswände (120) und der Querwände (130), wodurch die Trennplatte (1) als eine geschlossene Struktur gebildet wird.

2. Verfahren nach Anspruch 1, wobei die Trennwände (140) Längs- und/oder Quertrennwände (140) sind, die sich von der Innenfläche (111) erstrecken.

3. Verfahren nach einem der vorhergehenden Ansprüche, wobei die inneren Hohlräume (150) entlang der Längsrichtung (3) und/oder entlang der Querrichtung (4) durch die Öffnungen (141) verbunden sind.

4. Verfahren nach einem der vorhergehenden Ansprüche, wobei, wenn jede der zwei Halbplatten (101; 102) ein Paar paralleler Längswände (120), die sich von der Innenfläche (111) erstrecken, und ein Paar paralleler Querwände (130), umfasst die sich von der Innenfläche (111) erstrecken, die Struktur eine geschlossene Struktur mit einer Vielzahl von inneren Hohlräumen (150) ist, die durch die Öffnungen (141) verbunden sind.

5. Verfahren nach einem der vorhergehenden Ansprüche, wobei das Verfahren ferner den Schritt des Füllens der Trennplatte (1) zumindest teilweise mit einem feuerfesten Material (20) oder einem feuerhemmenden Material (21) umfasst.

6. Verfahren nach Anspruch 5, wobei der Schritt des Füllens der Trennplatte ferner umfasst:
- Durchstechen der Seitenwand einer der Halbplatten (101; 102) mit einer Injektionsnadel von der Außenfläche (112) zur Innenfläche (111) an einer Position eines inneren Hohlraums (150); und
- Einspritzen des feuerfesten Materials (20) oder des feuerhemmenden Materials (21) in den inneren Hohlraum (150).

7. Verfahren nach einem der vorhergehenden Ansprüche, wobei das Verfahren ferner das Einführen eines Ballasts (170) in die Öffnungen (141) umfasst, bevor die zwei Halbplatten (101; 102) zusammengeschweißt werden.

8. Trennplatte (1) aus einem Kunststoff (10), wobei die Trennplatte (1) zwei Halbplatten (101; 102) umfasst, wobei die zwei Halbplatten (101; 102) durch Spritzgießen unter Verwendung einer Form (100) produziert werden und daher identisch sind, und wobei jede der zwei Halbplatten (101; 102) umfasst:
- eine Seitenwand (110), die eine Innenfläche (111) und eine Außenfläche (112) umfasst;
- ein Paar paralleler Längswände (120), die sich von der Innenfläche (111) erstrecken, und ein Paar paralleler Querwände (130), die sich von der Innenfläche (111) erstrecken;
wobei beide Halbplatten (101; 102) ferner eine symmetrische Vielzahl von Trennwänden (140) umfassen, die sich von der Innenfläche (111) erstrecken, wobei:
- die Trennwände (140) so angepasst sind, dass sie innere Hohlräume (150) in jeder der Halbplatten (101; 102) begrenzen; und
- eine oder mehrere der Trennwände (140) entsprechende Öffnungen (141) umfassen, die sich durch die Trennwände (140) erstrecken;
und wobei die zwei Halbplatten (101; 102):
- gegeneinander entlang der Längswände (120) und der Querwände (130) angeordnet sind, sodass die Innenflächen (111) der Seitenwände (110) einander zugewandt sind und sodass die Trennwände (140) einer der Halbplatten (101) in direktem Kontakt mit den Trennwänden (140) der anderen Halbplatte (102) stehen, wenn die zwei Halbplatten (101; 102) gegeneinander angeordnet sind, wodurch eine Struktur mit einer Vielzahl von inneren Hohlräumen (150) gebildet wird, die durch die Öffnungen (141) verbunden sind; und
- entlang der Längswände (120) und der Querwände (130) zusammengeschweißt werden, wodurch die Trennplatte (1) als eine geschlossene Struktur gebildet wird.

9. Trennplatte (1) nach Anspruch 8, wobei die Trennwände (140) Längs- und/oder Quertrennwände (140) sind, die sich von der Innenfläche (111) erstrecken.

10. Trennplatte (1) nach Anspruch 8 oder 9, wobei die inneren Hohlräume (150) entlang der Längsrichtung (3) und/oder entlang der Querrichtung (4) durch die Öffnungen (141) verbunden sind.

11. Trennplatte (1) nach einem der Ansprüche 8 bis 10, wobei die Vielzahl von inneren Hohlräumen (150) die Innenfläche (111) der Seitenwand (110) vollständig bedeckt.

12. Trennplatte (1) nach einem der Ansprüche 8 bis 11, wobei die Seitenwände (110) der zwei Halbplatten (101; 102) eine Vielzahl von Queröffnungen (171) umfassen, die so angepasst sind, dass sie einander zugewandt sind, wenn die zwei Halbplatten (101; 102) gegeneinander angeordnet sind, wobei jede Queröffnung (171) durch Wände (172) begrenzt ist, die ein konvexes Profil (173) aufweisen, und wobei die Wände (172) aufeinander zu gebogen sind und miteinander verbunden sind, sodass sie den Wänden (172) ein konvexes Profil (173) verleihen.

13. Trennplatte (1) nach Anspruch 12, wobei zumindest eine Halbplatte (101) der zwei Halbplatten (101; 102) ferner eine Vielzahl von sich Längs- und/oder Quertrennwänden (140) umfasst, die sich von der Innenfläche (111) erstrecken, wobei:
- die Trennwände (140) so angepasst sind, dass sie innere Hohlräume (150) in der Halbplatte (101) begrenzen; und
- eine oder mehrere der Trennwände (140) der inneren Hohlräume (150), die über und unter den Queröffnungen (171) in der Trennplatte (1) begrenzt sind, entsprechende Öffnungen (141) umfassen, die sich durch die Trennwände (140) erstrecken.

## Revendications

1. Procédé de fabrication d'un panneau de séparation (1) constitué d'un matériau synthétique (10),
ledit procédé comprenant les étapes de :
- fourniture d'un moule (100) ;
- production de deux demi-panneaux (101 ; 102) par moulage par injection à l'aide dudit moule (100), chacun desdits deux demi-panneaux (101 ; 102) comprenant :
∘ une paroi latérale (110) comprenant une surface interne (111) et une surface externe (112) ;
∘ une paire de parois longitudinales parallèles (120) s'étendant à partir de ladite surface interne (111) et une paire de parois transversales parallèles (130) s'étendant à partir de ladite surface interne (111) ;
et lesdits deux demi-panneaux (101 ; 102) comprenant en outre une pluralité symétrique de cloisons (140) s'étendant à partir de ladite surface interne (111),
∘ lesdites cloisons (140) délimitant des cavités intérieures (150) dans chacun desdits demi-panneaux (101 ; 102) ; et
∘ une ou plusieurs desdites cloisons (140) comprenant des ouvertures respectives (141) s'étendant à travers lesdites cloisons (140) ;
- agencement desdits deux demi-panneaux (101 ; 102) l'un contre l'autre le long desdites parois longitudinales (120) et desdites parois transversales (130) de sorte que lesdites surfaces internes (111) desdites parois latérales (110) se font face et de sorte que lesdites cloisons (140) de l'un desdits demi-panneaux (101) soient en contact direct avec lesdites cloisons (140) de l'autre demi-panneau (102) lorsque lesdits deux demi-panneaux (101 ; 102) sont agencés l'un contre l'autre l'autre, formant ainsi une structure avec une pluralité de cavités intérieures (150) reliées par lesdites ouvertures (141) ; et
- soudage desdits deux demi-panneaux (101 ; 102) ensemble le long desdites parois longitudinales (120) et desdites parois transversales (130), formant ainsi ledit panneau de séparation (1) sous la forme d'une structure fermée.

2. Procédé selon la revendication 1, lesdites cloisons (140) étant des cloisons longitudinales et/ou transversales (140) s'étendant à partir de ladite surface interne (111).

3. Procédé selon l'une quelconque des revendications précédentes, lesdites cavités intérieures (150) étant reliées le long de la direction longitudinale (3) et/ou le long de la direction transversale (4) par lesdites ouvertures (141).

4. Procédé selon l'une quelconque des revendications précédentes, lorsque chacun desdits deux demi-panneaux (101 ; 102) comprend une paire de parois longitudinales parallèles (120) s'étendant à partir de ladite surface interne (111) et une paire de parois transversales parallèles (130) s'étendant à partir de ladite surface interne (111), ladite structure étant une structure fermée avec une pluralité de cavités intérieures (150) reliées par lesdites ouvertures (141).

5. Procédé selon l'une quelconque des revendications précédentes, ledit procédé comprenant en outre l'étape de remplissage dudit panneau de séparation (1) au moins partiellement avec un matériau résistant au feu (20) ou un matériau ignifuge (21).

6. Procédé selon la revendication 5, ladite étape de remplissage dudit panneau de séparation comprenant en outre :
- la perforation avec une aiguille d'injection de ladite paroi latérale de l'un desdits demi-panneaux (101 ; 102) à partir de ladite surface externe (112) jusqu'à ladite surface interne (111) au niveau d'une position d'une cavité intérieure (150) ; et
- l'injection dudit matériau résistant au feu (20) ou dudit matériau ignifuge (21) dans ladite cavité intérieure (150).

7. Procédé selon l'une des revendications précédentes, ledit procédé comprenant en outre l'insertion d'un lest (170) dans lesdites ouvertures (141) avant que lesdits deux demi-panneaux (101 ; 102) ne soient soudés ensemble.

8. Panneau de séparation (1) constitué d'un matériau synthétique (10), ledit panneau de séparation (1) comprenant deux demi-panneaux (101 ; 102), lesdits deux demi-panneaux (101 ; 102) étant produits par moulage par injection à l'aide d'un moule (100) et étant donc identiques, et chacun desdits deux demi-panneaux (101 ; 102) comprenant :
- une paroi latérale (110) comprenant une surface interne (111) et une surface externe (112) ;
- une paire de parois longitudinales parallèles (120) s'étendant à partir de ladite surface interne (111) et une paire de parois transversales parallèles (130) s'étendant à partir de ladite surface interne (111) ;
lesdits deux demi-panneaux (101 ; 102) comprenant en outre une pluralité symétrique de cloisons (140) s'étendant à partir de ladite surface interne (111),
- lesdites cloisons (140) étant adaptées pour délimiter des cavités intérieures (150) dans chacun desdits demi-panneaux (101 ; 102) ; et
- une ou plusieurs desdites cloisons (140) comprenant des ouvertures respectives (141) s'étendant à travers lesdites cloisons (140) ;
et lesdits deux demi-panneaux (101 ; 102) étant :
- agencés l'un contre l'autre le long desdites parois longitudinales (120) et desdites parois transversales (130) de sorte que lesdites surfaces internes (111) desdites parois latérales (110) se font face et de sorte que lesdites cloisons (140) de l'un desdits demi-panneaux (101) soient en contact direct avec lesdites cloisons (140) de l'autre demi-panneau (102) lorsque lesdits deux demi-panneaux (101 ; 102) sont agencés l'un contre l'autre, formant ainsi une structure avec une pluralité de cavités intérieures (150) reliées par lesdites ouvertures (141) ; et
- soudés ensemble le long desdites parois longitudinales (120) et desdites parois transversales (130), formant ainsi ledit panneau de séparation (1) sous la forme d'une structure fermée.

9. Panneau de séparation (1) selon la revendication 8, lesdites cloisons (140) étant des cloisons longitudinales et/ou transversales (140) s'étendant à partir de ladite surface interne (111).

10. Panneau de séparation (1) selon la revendication 8 ou 9, lesdites cavités intérieures (150) étant reliées le long de la direction longitudinale (3) et/ou le long de la direction transversale (4) par lesdites ouvertures (141).

11. Panneau de séparation (1) selon l'une quelconque des revendications 8 à 10, ladite pluralité de cavités intérieures (150) recouvrant complètement ladite surface interne (111) de ladite paroi latérale (110).

12. Panneau de séparation (1) selon l'une quelconque des revendications 8 à 11, lesdites parois latérales (110) desdits deux demi-panneaux (101 ; 102) comprenant une pluralité d'ouvertures transversales (171) adaptées pour se faire face lorsque lesdits deux demi-panneaux (101 ; 102) sont agencés l'un contre l'autre, chaque ouverture transversale (171) étant délimitée par des parois (172) possédant une section transversale convexe (173), et lesdites parois (172) étant pliées l'une vers l'autre et étant reliées entre elles afin qu'elles donnent auxdites parois (172) une section transversale convexe (173).

13. Panneau de séparation (1) selon la revendication 12, au moins un demi-panneau (101) desdits deux demi-panneaux (101 ; 102) comprenant en outre une pluralité de cloisons longitudinales et/ou transversales (140) s'étendant à partir de ladite surface interne (111),
- lesdites cloisons (140) étant adaptées pour délimiter des cavités intérieures (150) dans ledit demi-panneau (101) ; et
- une ou plusieurs desdites cloisons (140) desdites cavités intérieures (150) délimitées au-dessus et au-dessous desdites ouvertures transversales (171) dans ledit panneau de séparation (1) comprenant des ouvertures respectives (141) s'étendant à travers lesdites cloisons (140).
